(19) Europäisches Patentamt
European Patent Office
Office européen des brevets

(11) **EP 3 944 092 A1**

(12) **EUROPEAN PATENT APPLICATION**

(43) Date of publication:
**26.01.2022 Bulletin 2022/04**

(21) Application number: **21184533.4**

(22) Date of filing: **08.07.2021**

(51) International Patent Classification (IPC):
**G06F 16/21** (2019.01)     **G06F 16/2458** (2019.01)

(52) Cooperative Patent Classification (CPC):
**G06F 16/213; G06F 16/2477**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2020 US 202063054679 P**
**25.06.2021 US 202117358427**

(71) Applicant: **Observe, Inc.**
**San Mateo, CA 94401 (US)**

(72) Inventors:
• **Unterbrunner, Philipp**
**San Mateo, 94401 (US)**
• **Li, Ang**
**San Mateo, 94401 (US)**
• **WATTE, Jon**
**San Mateo, 94401 (US)**

(74) Representative: **Clark, Jane Anne et al**
**Mathys & Squire**
**The Shard**
**32 London Bridge Street**
**London SE1 9SG (GB)**

(54) **DATA CAPTURE AND VISUALIZATION SYSTEM PROVIDING TEMPORAL DATA RELATIONSHIPS**

(57)     A data capture and visualization system providing temporal data relationships is disclosed. An example embodiment is configured to: capture and forward data using collection agents; buffer and load the captured data into a data warehouse; transform the data as specified by a temporal algebra query language; enable querying of the transformed data using the temporal algebra query language, the querying including temporal data relationships; and present the results of the queries to a user via a user interface.

Fig. 1A

EP 3 944 092 A1

## Description

This non-provisional patent application draws priority from U.S. provisional patent application serial no. 63/054,679; filed July 21, 2020. This present non-provisional patent application draws priority from the referenced patent application. The entire disclosure of the referenced patent application is considered part of the disclosure of the present application and is hereby incorporated by reference herein in its entirety.

COPYRIGHT NOTICE

A portion of the disclosure of this patent document contains material that is subject to copyright protection. The copyright owner has no objection to the facsimile reproduction by anyone of the patent document or the patent disclosure, as it appears in the U.S. Patent and Trademark Office patent files or records, but otherwise reserves all copyright rights whatsoever. The following notice applies to the disclosure herein and to the drawings that form a part of this document: Copyright 2019-2021, Observe Inc., All Rights Reserved.

TECHNICAL FIELD

This patent document pertains generally to data processing, data capture, data communication networks, and more particularly, but not by way of limitation, to a data capture and visualization system providing temporal data relationships.

BACKGROUND

Originally, data comes from somewhere. These data might be messages printed to the console from a batch process. These data may be log files on disk coming from a server, such as a web application or database server. These data may be events emitted by some small internet-of-things (IoT) sensor or device, by a machine on a factory floor, or by a cash register in a department store. Data may even already live in a database table somewhere, prepared by some other system (e.g., this is common for, for example, customer profile information). Which origin data come from is important to capture as metadata about the data, so that appropriate processing can be made in subsequent steps. As an example, the time zone in effect at the time of data capture may be important later, when correlating events across a globally distributed enterprise. Additionally, which physical host or machine or container or database the data comes from, is important metadata, as opposed to the entities perhaps mentioned within the data. For example, a web server may emit a log statement saying that user X logged in from Internet Protocol (IP) Y to application area Z. The log message contains references to entities X, Y, and Z, but the entity of which web server actually emitted the log statement is metadata about the origin, not found within the datum itself. Additionally, the timing or timestamp information for each item of data can be very important. For example, most data is associated with or assigned one or more timestamps. These timestamps can represent an "application time" associated with a time given by a source of the data or event. The timestamps for a particular datum can also represent an event time, a system time, or other temporal data associated with a system interaction with the datum. Other temporal data associated with a data item can also be important in various contexts. However in most cases, the metadata (including temporal data) or the data itself either doesn't provide the desired information or the metadata is so voluminous that important data relationships can be obscured by the sheer volume of data.

BRIEF DESCRIPTION OF THE DRAWINGS

The various embodiments are illustrated by way of example, and not by way of limitation, in the figures of the accompanying drawings in which:

Figs. 1A, 1B, and 2 are a processing flow diagram illustrating an example embodiment of the data capture and visualization system and platform providing temporal data relationships as described herein;
Fig. 3 illustrates an example embodiment providing temporal splicing and for visualizing data temporal features;
Fig. 4A illustrates an example embodiment showing a sample query plan in Snowflake™ as related to an example of temporal deduplication;
Figs. 4B and 4C illustrate an example embodiment showing an execution plan in Snowflake™ as an example of temporal deduplication;
Figs. 5A through 5D illustrate an example embodiment showing an execution plan in Snowflake™ as an example of temporal group by;
Fig. 6 illustrates an example embodiment showing query plans in Snowflake™ as related to analytic functions;

Figs. 7 and 8 illustrate an example embodiment showing a sample query plan in Snowflake™ as related to alternatives to analytic functions: ALL or MIN/MAX;

Figs. 9A through 9E illustrate an example of temporal datasets as related to backfilling and asynchronous processing;

Fig. 10 illustrates an example embodiment as related to strict layers;

Fig. 11 illustrates an example embodiment as related to integrated layers;

Figs. 12 through 14 illustrate an example as related to time windows; and

Fig. 15 is a processing flow diagram illustrating an example embodiment of the data capture and visualization system and platform providing temporal data relationships as described herein.

DETAILED DESCRIPTION

In the following description, for purposes of explanation, numerous specific details are set forth in order to provide a thorough understanding of the various embodiments. It will be evident, however, to one of ordinary skill in the art that the various embodiments may be practiced without these specific details.

A data capture and visualization system providing temporal data relationships is disclosed. In the various example embodiments disclosed herein, a system can be implemented to capture and visualize machine data from a wide variety of sources. In a particular example embodiment, a platform provides a task-specific application to manage information technology (IT) infrastructure deployed on top of an Amazon™ Web Services (AWS)™ cloud infrastructure and the Kubernetes container orchestration system, as a first example illustrating the features of the platform.

Amazon™ Web Services (AWS)™ is a comprehensive and broadly adopted cloud platform, offering many fully featured services from data centers globally. These services include infrastructure technologies like compute, storage, and databases; and other services, such as machine learning and artificial intelligence, data lakes and analytics, and Internet of Things (IoT).

Kubernetes™ (K8s) is an open-source system for automating deployment, scaling, and management of containerized applications. Kubernetes™ Ingress is an application programming interface (API) resource that allows a user to manage external or internal HTTP(S) access to Kubernetes™ services running in a cluster. For example, Amazon™ Elastic Load Balancing (ELB) Application Load Balancer (ALB) is a popular AWS service that load balances incoming traffic at the application layer (layer 7) across multiple targets, such as Amazon™ EC2 instances, in a region. ELB/ALB supports multiple features including host or path based routing, TLS (Transport Layer Security) termination, WebSockets, HTTP/2, AWS WAF (Web Application Firewall) integration, integrated access logs, and health checks. A Kubernetes™ kubelet is the primary "node agent" that runs on each node.

The open source AWS ALB Ingress controller triggers the creation of an ALB and the necessary supporting AWS resources whenever a Kubernetes user declares an Ingress resource in the cluster. The Ingress resource uses the ALB to route HTTP(S) traffic to different endpoints within the cluster. The AWS ALB Ingress controller works on any Kubernetes™ cluster including Amazon™ Elastic Kubernetes™ Service (Amazon EKS).

Amazon™ Simple Storage Service or Amazon S3 is a service offered by Amazon™ Web Services (AWS) that provides object storage through a web service interface. Amazon S3 uses the same scalable storage infrastructure that Amazon.com uses to run its global e-commerce network. Amazon S3 can be employed to store any type of object which allows for uses like storage for Internet applications, backup and recovery, disaster recovery, data archives, data lakes for analytics, and hybrid cloud storage. An S3 Proxy is a static web site hosting feature available in S3 that allows developers to host their websites without the need to run a web server.

Apache™ Kafka is an open-source stream-processing software platform developed by the Apache Software Foundation™, written in Scala and Java™. The solution aims to provide a unified, high-throughput, low-latency platform for handling real-time data feeds. Kafka can connect to external systems (for data import/export) via Kafka Connect and provides Kafka Streams, a Java stream processing library. Kafka uses a binary TCP-based protocol that is optimized for efficiency and relies on a "message set" abstraction that naturally groups messages together to reduce the overhead of the network roundtrip. This can lead to larger network packets, larger sequential disk operations, contiguous memory blocks, and the like, which allows Kafka to turn a bursty stream of random message writes into linear writes.

Snowflake™ offers a cloud-based data storage and analytics service, generally termed a "data warehouse." The data warehouse allows corporate users to store and analyze data using cloud-based hardware and software. Snowflake can run on Amazon™ S3. The Snowflake™ Data Exchange allows customers to discover, exchange, and securely share data. Although example embodiments disclosed herein include the use of Snowflake™, other embodiments can be similarly implemented in view of the techniques disclosed herein on other relational database or data warehouse technologies, such as Oracle™, DB/2, or Hadoop/HIVE™.

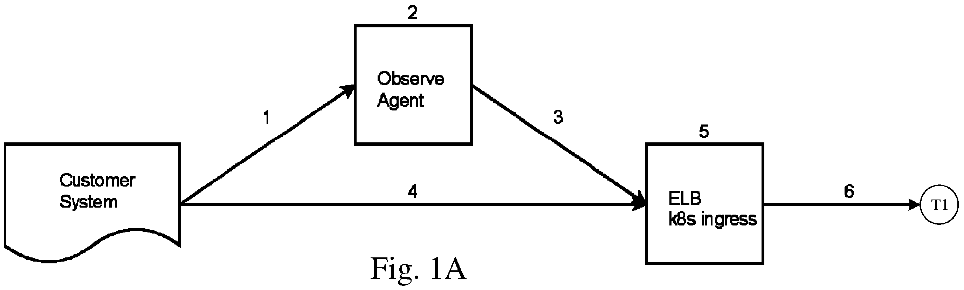

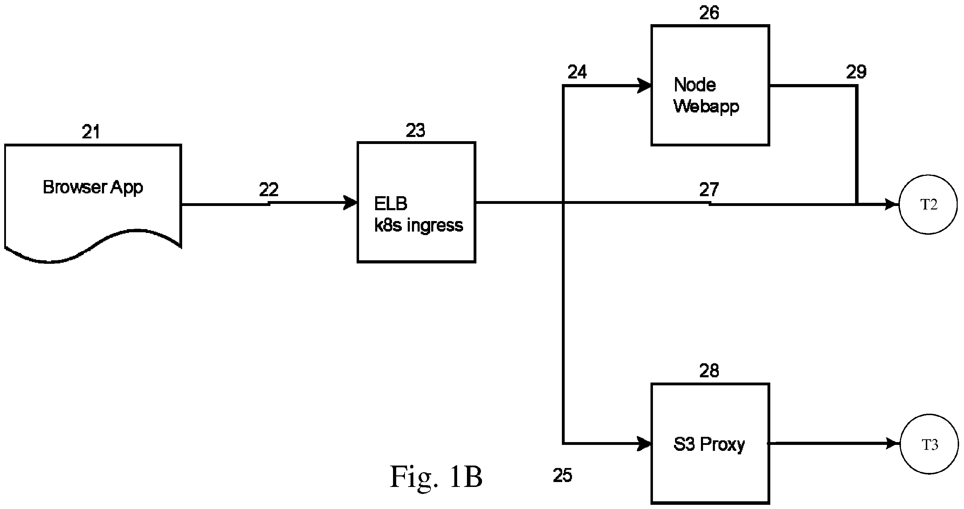

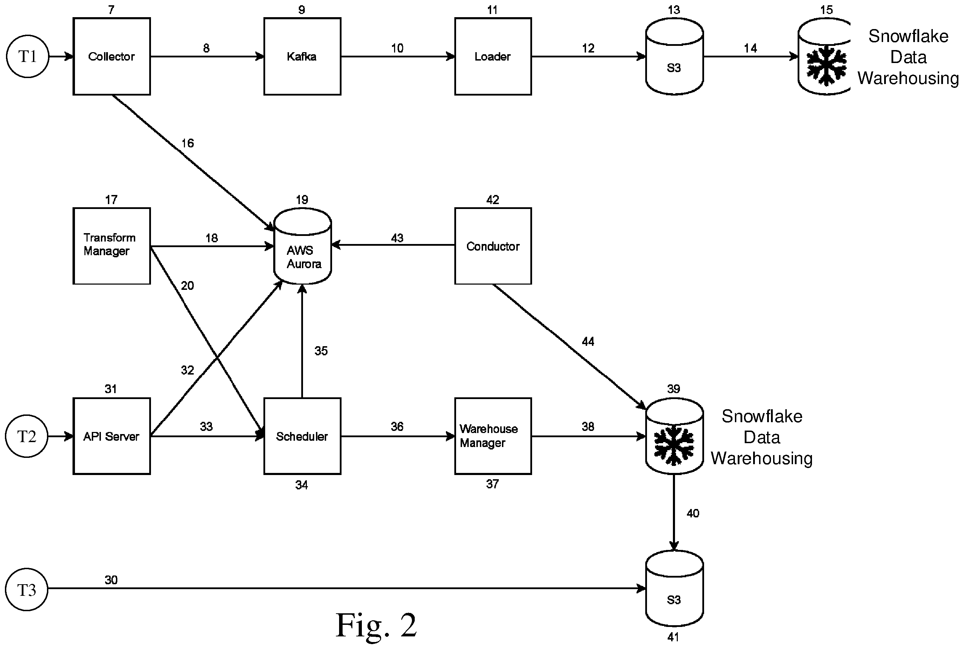

Figs. 1A, 1B, and 2 are a processing flow diagram illustrating an example embodiment of the data capture and visualization system and platform providing temporal data relationships as described herein. Referring to Figs. 1A, 1B, and 2, the data processing model and platform of an example embodiment is illustrated and described in more detail below.

The platform of an example embodiment contains many affordances for capturing, processing, and presenting data, with special attention paid to relationship between entities, and evolution of such relationships over time. In an example embodiment, the features and data processing operations provided by the platform include the following: Data Origin, Data Capture and Forwarding, Data Collection, Data Buffering, Data Loading, Data Transformation, Data Storage, Data Querying, and Data Presentation. Each of these features and data processing operations are described in more detail below.

Data Origin

Data can originate from a variety of sources. These sources might include messages printed to the console from a batch process. These data may be log files on disk coming from a server such as a web, application, or database server. These may be events emitted by some small internet-of-things sensor or device, or by a machine on a factory floor, or by a cash register in a department store. Data may even already live in a database table somewhere, prepared by some other system (this is common for, for example, customer profile information.) The origin or provenance of the data is important to capture as metadata about the data, so that appropriate processing can be made in subsequent steps. As an example, the time zone in effect at the time of data capture may be important later, when correlating events across a globally distributed enterprise. Additionally, which physical host or machine or container or database the data comes from, is important metadata, as opposed to the entities perhaps mentioned within the data. For example, a web server may emit a lot statement saying that user X logged in from IP Y to application area Z. The log message contains references to entities X, Y, and Z, but the entity of which web server actually emitted the log statement, is metadata about the origin, not found within the datum itself. The example embodiments generate and/or retain this metadata so the provenance and timing metadata can be used later in the features and data processing operations performed by the platform of an example embodiment. The platform disclosed herein is agnostic regarding how data are generated. For example, there is no requirement for a custom Application Programming Interface (API) that a customer has to use to generate data for the platform. Instead, the platform of an example embodiment captures data through whatever means are already available. If a customer wants use a rich data generation API (such as OpenTracing™ or Prometheus™ or logging full JSON™ encoded objects), the platform enables use of whatever data mechanism works best for that customer.

Data Capture and Forwarding

In the platform of an example embodiment, data are captured either using special collection services known as "collection agents," or by pointing data producers directly at collection services. A customer can use industry standard agents like "filebeat" or "fluent-bit" can be used to capture log files or other data inputs, and a customer can also choose to host one or more instances of the collection agent for capturing data. The collection agent is especially useful on systems using Prometheus™, as the agent can query Prometheus™ endpoints and push the results into the platform of the example embodiment. Data already stored in a database or data warehouse do not need an agent, assuming the warehouse is generally visible through Snowflake™ data sharing or another mechanism for accessing such data. The collection agent can also add metadata about where the agent is running and from where the agent is capturing data.

Data Collection

The platform of an example embodiment can run a set of ingestion endpoints in the cloud. For data that don't come in through Snowflake™ data sharing, this is the destination where the customer hands off the data, and the data can no longer be directly modified by the customer. At this point, metadata, such as which registered customer provided the data, and through which customer-defined integration name the data was received, is attached to the data as metadata. Service authentication can also be done at this point. Data that are not accompanied by proper customer-specific credentials are not accepted into the system.

Data Buffering

Customer data production may be bursty. This is especially true when new systems are onboarded, and historical data are captured. Additionally, while the platform of an example embodiment works to maintain industry-leading uptime, there exists the possibility of an outage on the platform or on a dependent Snowflake™ data processing side. To avoid having to reject data provided by customers, all data collected for the platform of an example embodiment goes through a buffering stage, with sufficient storage capacity for more than a day of data ingest. Under normal circumstances, the queuing latency in this buffer is negligible; but, during ingest spikes or temporary capacity outages, this buffer makes sure the data will eventually be processed once accepted. In an example embodiment, Kafka can be used for buffering to handle bursty data.

Data Loading

Data are pulled from the buffer and loaded into the Snowflake™ data warehouse, through a process known as the loader. The function of this loader is to collate data arriving for individual customers into per-customer load requests, as well as format and forward data and metadata in a mode suitable for semi-structured SQL processing. In another example embodiment, the data loading process can have a loader and a separate encoder. In this embodiment, the data is seen and compressed by the encoder, and the loader just deals with telling the data warehouse to load the data as output by the encoder, without actually itself processing the data.

All the data processing stages of the platform of an example embodiment as described above clearly maintain a separation between "the data" that the customer initially provided, and "the metadata" that was captured around the data. Because the data are loaded as un-touched as possible into a first permanent data store, it is always possible for the customer to change their mind about how to process data, and go back to the initial data store to apply new processing rules. We call this unmodified original data "evidence."

Data Transformation

Once evidence data is loaded into the base layer (which we call the "observations table" or the "raw firehose"), the process of refining and shaping the data into well-behaved data entities with relations starts. When starting with the platform of an example embodiment, a customer will get one or more pre-installed transformation configurations, for example for AWS infrastructure or Kubernetes™ clusters; but, the platform allows customers to modify these initial configurations, to extend them with further derived configurations, and to create new basic configurations from scratch.

Transformation is viewed as successive steps of refinement, where datasets are selected, filtered, aggregated, correlated, and additionally processed to produce highly useful and valuable views or processed data observations out of the raw observations table. For example, a set of rules may select data observations from a Kubernetes™ kubelet that specify container creation, lifetime, and death, and extract the container identifiers (ID), cluster ID, and other relevant fields out of those log events, and create a dataset called "container events." A further derived transform may take these container events, identify resource keys in the events (in this case, cluster ID + cluster-specific container ID) and make the system build a historical inventory of containers and their state over time out of this set of updates. Those historical containers are then available to other processing streams that happen to have the same kind of identifier in them, so the platform can provide, "services running in containers."

The majority of the platform of an example embodiment focuses on making all necessary data and metadata available for the transform step, and efficiently implementing the transform step both for preconfigured, and user-configured datasets. Decisions made in this area include anything from how frequently to pre-process incoming data, to whether to process the data only on demand, or materialize the result of a transform to make it immediately accessible to queries without further processing.

Transforms are described using statements in the temporal algebra query language we created called the OPAL (Observe Processing and Analytics Language) query language. The structure and syntax of OPAL is described in detail below. These transforms also run in an environment that is defined for the transforms in question. For example, if a transform joins four different datasets, the transform runs after the transforms creating those datasets are already finished. This is an implementation decision made by choosing to treat stream processing as a never-ending sequence of small batches of rows, which makes processing more efficient than a record-at-a-time stream-based system.

Data Storage

Once a dataset is defined, and if the system is directed to materialize its transform physically (rather than just remembering the transform rules and applying them on demand when a query is run,) the dataset is materialized into one or more tables in the Snowflake™ data warehouse. Tables may be partitioned both across attributes, across time, and across functional areas. Frequently changing attributes of a resource, such as metrics, may be stored separately from seldom-changing attributes, such as the designated name or central processing unit (CPU) type of a host. Data sets may be partitioned in time to allow for larger data sets without exceeding particular built-in volume limitations of per-table size in the underlying Snowflake™ database.

To the user, the specific physical data representation chosen by the storage subsystem is not visible, as the datasets present themselves and behave as per their definitions in dataset schema and metadata. However, the correct choice of physical representation of the dataset has significant efficiency impacts.

Data Querying

Once the user wants to query some state of the system being observed, a query is formed on top of the existing datasets using the OPAL (Observe Processing and Analytics Language) query language. This query is additionally conditioned to be easily presented in the user interface. For example, an OPAL statement that runs as a transform will unconditionally process all matching data, whereas a user interface (UI) may limit the number of rows presented to something like 1,000 rows, because the user will not be expected to scroll through all available results. Instead, the user would be expected to further aggregate and filter the query to find the results in which they are interested.

The queries formulated in the user interface generally do not come from direct user-input of OPAL statements, but instead are built by the user using affordances in the user interface, such as "follow link to related dataset" and "show only values in the top-10 list," or clicking to focus on a specific set of entities or time range. Another use of the query language is the user interface created for browsing datasets and metadata.

Data Presentation

Interactive data exploration benefits from data further conditioned than what a raw processing query can provide. Thus, the data presentation includes affordances such as "rolling up" resource states (e.g., returning one row per resource instance, with all the states of that resource over time merged into a single column,) and "linking" key columns (e.g., showing the name of the target entity, in place of the specific key value used to declare a foreign key relationship).

Additional Details on the Various Example Embodiments of the Data Capture and Visualization System Providing Temporal Data Relationships

Basic Terminology and Definitions

Example embodiments of the data capture and visualization system providing temporal data relationships can be implemented to capture and visualize machine data from a wide variety of sources. The example implementation is particularly focused on functionality and operations to facilitate the visualization of the temporal dimension of the data. With the focus on the temporal dimension, it's become clear that we need to distinguish the fundamental algebraic building blocks, from the temporal entity modeling. Therefore, the following terminology can be used to clarify the disclosure provided herein.

Table Kinds

| Name | Definition |
|---|---|
| data table | A table without time stamps, conceptually valid forever |
| snapshot table | A table without explicit timestamps, but with an implicit point-in-time timestamp as metadata |
| point time table | A table with a single non-null timestamp column, interpreted "at this time" |
| interval time table | A table with two non-null(*) timestamp columns, interpreted "within this time range" |
| Event | An Entity Model level concept, where an Event has a Source, a Time, a Message, and ideally one or more Foreign Keys. Implemented using a point time table |
| Resource | An Entity Model level concept, where a Resource has a Primary Key, a Validity Interval, usually a Label field, one or more Attributes, and often one or more Candidate Keys, and one or more Foreign Keys. Implemented using an interval time table |
| (*) non-null time columns for resources are conceptual; physically we may choose to use null to store the logical "beginning of time" or "end of time" values. | |

Given these definitions, it's important to distinguish "Resource" (the Entity Model construct) from "interval time table" (the temporal relational algebraic building block). In some cases, the words "Resource" or "Event' were used where the underlying table types should be used.

Normal Forms

Just like relational algebra has normal forms, temporal algebra needs normal forms, and the Entity Model needs normal forms.

Table Normal Forms

| Name | Description |
|---|---|
| interval normal form | This is a temporal algebra form. For interval normal form: The table is of interval time type, and has an entity primary key defined. For every entity, for every time point, there exists at most one matching row in the table. |
| packed interval normal form | This is a temporal algebra form. For packed interval normal form, the table is in interval normal form, and additionally, no two rows sharing an entity primary key and abutting time intervals have the same set of attribute values. |
| Event normal form | This is an Entity Model form. For Event normal form: The table is of point time type. The table has a "source" field that is a foreign key into all possible sources. The table has a "description" field which is user-readable text. The table has one or more foreign keys into Resource tables. |
| Resource normal form | This is an Entity Model form. For Resource normal form: The table is of interval time type. The table has an entity primary key defined. For every entity, for every time point, there exists at most one matching row in the table. |

Note that, where it says "table" above, it talks about the logical cohesive dataset as seen by the user; the implementation may use a basic relational table with time validity interval fields, or may use a sixth normal form columnar table format, or may use time-based partitioned tables, or some other storage format in the implementation. There may not be a meaningful "point normal form" distinction from a regular relational table. The name normal form is used as a shorthand for a dataset that is either a data table, or in Event normal form, or in Resource normal form.

Corollaries

If the primary key set for a table is the empty set, that table makes up a "singleton." For interval tables, the "singleton" interpretation means that the table must not have any overlapping intervals. For resource tables, the "singleton" interpretation means that the table itself is the "resource."

Data Model

An example embodiment is based on a temporal-relational data model. A "regular" relational database is designed to store and reason over the latest state of the world. By contrast, an example embodiment keeps a full history of the events and derived state of the world, and makes it easy to formulate queries over that history. To this end, an example embodiment features a type system and temporal-relational algebra that treats time as a first-class citizen.

Temporal Tables

The fundamental abstraction of an example embodiment is a temporal table. A temporal table is a relational table with one or more timestamp columns, which enjoy special treatment by an example embodiment. An example embodiment distinguishes two types of temporal tables:

• Point Tables

• Interval Tables

Point Tables

A point table is a relational table with a single, designated timestamp column. By virtue of that timestamp column, each row has some point in time associated with it. The timestamp may be different for every row of the table, or it may be the same timestamp for every row (in which case the whole table may be considered as describing a point in time, and the timestamp column may be omitted in the physical representation).

Interval Tables

Interval Tables are also called a "time-varying relations (TVR)" or simply "temporal relations" in the literature.

We use the term "interval tables" to better distinguish them from point tables, which are algebraically and semantically quite different. The canonical representation of a temporal table is a relational table with two additional timestamp columns: *valid_from, valid_to.* The two timestamps form an interval that is closed at its lower bound and open at its upper bound. The left-closed, right-open design choice was made primarily for compatibility with SQL:2011. Each row in a temporal table is defined to "exist" in the database for the time range *valid_from, valid_to.* That time range is typically called the valid time of the row in temporal database literature. It is also called application time in SQL:2011. By way of the valid time of individual rows, an interval table not only reflects the state of (some aspect of) the world at a specific point in time (example: the set of nodes in a cluster as of now), but the complete history of (some aspect of) the world over time. To compute a snapshot of a table at a specific point in (application) time $t$ using SQL, one simply selects all the rows *WHERE t >= valid_from AND t < valid_to.* Time ranges may be open. An open time range is expressed by setting the corresponding bound to infinity, which can be expressed using *NULL* in SQL. A row that exists from time $t$ to infinity would have *valid_from = t* and *valid_to = NULL.* A row that exists independent of time simply has *valid_from = NULL* and *valid_to = NULL.* A time-invariant table (i.e., a regular table) can thus be seen as a special case of a temporal table where all timestamps are *NULL.* Implementation note: selection predicates that involve open time ranges need to be reformulated accordingly; for example, *WHERE t >= valid_from AND t < valid_to* would become *WHERE (t >= valid_from OR valid_from IS NULL) AND (t < valid_to OR valid_to IS NULL)* in SQL. Implementations may choose to use some minimum or maximum integer in their physical representation instead of *NULL* where it provides a performance benefit, as long as the open-range semantics are preserved.

Datasets

Users of an example embodiment currently do not interact with temporal tables, but with datasets. (We may even choose to never expose the term "temporal table" to our users.). Datasets are either resources or events, which correspond to interval tables and point tables, respectively.

Resources

A resource can be understood in two ways:

1. an interval table (with a primary key and other metadata)
2. a definition of transforms which derive that interval table from events (i.e., point tables)

The two representations are duals of one another. The first is the "temporal database" view of the world. The second is the "stream processing" view of the world. When issuing queries, users interact with the first representation. When managing transforms, they interact with the second representation. Let us focus on the first representation, the temporal table. Each resource has a canonical representation that is a single, temporal table. That temporal table has a primary key and may have foreign keys into other resources i.e. their temporal tables. Each row of the temporal table contains the full state of the resource (all its attributes i.e. fields i.e. columns) for some interval of application time, expressed through the *valid_from, valid_to* pair of timestamps. It is important to note that the canonical representation describe above is not necessarily the (only) physical representation of a resource in the platform. There may be multiple database tables corresponding to a single resource, with arbitrary partitioning and overlap. The canonical table may even be computed on-demand using transforms over events, see below. Notably, the canonical table may have been vertically partitioned into 6th normal form A6NFB, with each partition just containing the primary key of the resource, and a single other column. Such a physical design may save space and has performance benefits whenever only a small subset of columns are requested by a query, see Temporal Projection.

Events

An event is just a timestamped datum. It is a measurement or belief at some point in time. How to derive resource state from an event or set of events is subject to application-specific interpretation of these events. That interpretation is expressed through transforms from point tables (events) to interval tables (resources). For example, assume there is an event at timestamp *t1* and we know (as human beings looking at the data) that it describes the creation of some resource. We interpret this event as an insert into the temporal table of that resource at time *t1.* Under this interpretation, the temporal table should thus contain a row with *valid_from = t1, valid_to = NULL* (and other information extracted from the event). We can express this interpretation as a transform that inserts such a row into the temporal table whenever it encounters such an event. Further assume there is a later event at timestamp *t2,* and we know it describes the destruction of said resource at time *t2.* Under this interpretation, the temporal table of the resource should thus contain a row with *valid_from = t1, valid_to = t2.* We can express this interpretation as a transform that updates the corresponding row of the temporal table, setting *valid_to = t2.* Events may have foreign keys into any number of resources, and they may be input to multiple transforms.

## Special Datasets

### Observations

The *observation* table is just an event table, with the *bundle_timestamp* as its timestamp column. *bundle_timestamp* is interesting because it is available for use by any event or resource derived from the observation table. That said, the observation *fields* typically contain nested application timestamps that are more important for users. Our platform provides ways to manipulate and promote these application timestamps to event timestamps and resource timestamps that then receive special treatment by our temporal-relational operators such as temporal joins. *bundle_timestamp* is also an example of a system timestamp. It represents the point in time at which an example embodiment (to be specific, the observer, a sensor or the collector) learned of the *observation.* There can be significant skew between system timestamps and application timestamps, which has consequences on the definition and implementation of transforms (out of scope here). Side note: The distinction between application time and system time is a recurring theme in the stream-processing literature. It is the dual of the distinction between valid time and system time in temporal database literature. Curiously, SQL:2011 also refers to valid time as application time.

### External Datasets

An external dataset is a dataset that is not derived from the *observation* table, but is defined or imported through some other means, such as CSV file upload or Snowflake data sharing. We do not support external datasets at the time of writing, but will likely do so in the future. External datasets raise problems when they are used as part of transforms. An example embodiment does not have access to their transform definition, if any, and cannot prevent users from performing breaking changes to the schema or contents of linked external datasets. So we will need to apply a few restrictions on them when it comes to transforms (for example: no linking, just copy-on-import). Transforms aside, external datasets can be referenced and queried like any other dataset. There is nothing wrong with a user uploading a static table as a CSV file instead of having to funnel it through the *observation* table.

### Snapshot Tables

A snapshot is a slice of an interval table at a specific point in time. It can be interpreted geometrically as an intersection of time intervals i.e. line segments with a point in time. Every row whose time interval intersects with the desired point in time is part of the snapshot. For some snapshot time *t*, the implementation of that intersection in SQL is just a simple *WHERE t >= valid_from AND t < valid_to* clause. The result of that intersection is obviously a point table. Because snapshots are point tables (where each row describes the same point in time), snapshots can be reasoned over and processed using plain relational algebra and SQL. That makes queries over snapshots much cheaper to process than queries over interval tables.

### Snapshot Tables vs. Time-invariant Tables

Snapshot tables and time-invariant tables are not the same thing, even though they both may have their timestamp column(s) removed. Their physical representation may look exactly the same, but:

- A snapshot is a slice of an interval table at a specific point in time. It is a point table.
- A time-invariant table is an interval table, where the validity interval of each row is negative infinity to infinity.

Snapshots and time-invariant tables thus behave very differently when queried or joined with other tables. Users must specify whether an external dataset that does not have timestamp columns shall be considered a snapshot (and as of what time), or a time-invariant table.

### Joins over Temporal Tables

The SQL implementation of temporal joins is discussed in Temporal Join. In the present document, we only concern ourselves with the algebraic definition of temporal joins. An example embodiment supports all the usual relational operations: select, project, union, intersect, join... Point tables describe points in time, so they behave just like regular relational tables. The only interesting cases are binary operations (joins) over point tables with different timestamps, but the semantics are obvious still. For example, an (inner) join of two point tables with different timestamps produces an empty table, because points of different time do not match. Joins of interval tables are tricky to implement efficiently, but the semantics boil down to the following. Time in an example embodiment is discrete. To be precise, the atomic time interval in an example embodiment, also called the chronon, is 1 nanosecond. Each row with interval [t, t') can conceptually be "unpacked" into a set of rows with intervals [t, t+1), [t+1, t+2), ... [t+n, t'). Each temporal-relational operator, such as temporal join, can then be defined as its regular relational counterpart over that unpacked representation (followed by re-packing). For example, any temporal join contains an implicit equality predicate on the unpacked timestamp columns. That leaves the question of semantics when interval tables and point tables are combined by a binary operator such as Union or Join. What is the result of a join between an interval table and a point table? Is the algebra even closed?

Inner Join of Interval Tables and Point Tables

To better understand the nature of a temporal join, it helps to look at it as a geometric operation. Suppose there are two interval tables *r* and *s*. Assume we are performing a pure temporal join, there is no join predicate besides time overlap. Such a join is really a temporal Cartesian product-rarely useful by itself, but an important building block. Most joins have additional join predicates besides interval-overlap, such as equality predicates based on foreign key constraints. Nothing in the discussion below precludes additional predicates. We just choose to focus on the temporal predicate. As described in Temporal Join, one can interpret a temporal join as follows. For each row in r, draw a corresponding line segment from points *valid_from* to *valid_to,* along an (infinite) time axis. Do the same for s. For each overlapping pair of line segments from *r* and *s*, draw the intersection of these input segments. The set of intersections produced hereby is exactly the result of the temporal join (technically, it is homomorphicto the result of the temporal join). The semantics of joining interval tables and point tables follow from the geometric interpretation above. Joining an interval table and a point table produces a point table, because intersecting a line segment with a point can only produce a point. Joining two point tables is also well-defined by the way: it returns only those pairs of rows with the exact same timestamp. (Incidentally, that means joining two snapshot tables with different timestamps produces an empty result.)

Inner Join of Interval Tables and Snapshot Tables

A snapshot is a slice of an interval table at a specific point in time. The geometric interpretation of joining an interval table with a snapshot table is thus the intersection of a set of line segments with a single point. Intersection is a commutative and associative operation. It does not matter if the snapshot is performed on the join inputs, or on the result of the join. It follows that "snapshotting" can be pushed below the temporal join in the query plan. Theorem 1:

$$(r \bowtie s)t = rt \bowtie st$$

Temporal joins are relatively expensive, because the interval-overlaps predicate in the time dimension is much more expensive to evaluate than an equality predicate. So if a query is snapshotting the result of a join, it is a good heuristic to always push the snapshot "operator" below the join, ideally, inside the scan operators. What is more, the result of a join between a snapshot *r* at time *t* and a temporal table s can only produce a snapshot at time *t*. The join cannot match any rows in s that do not intersect with point *t*. Thus, one can use a snapshot of s at time *t* instead of all of s. Theorem 2:

$$rt \bowtie s = rt \bowtie st$$

Because joins are commutative and associative, Theorem 2 means that a snapshot of any input table will "infect" the rest of the query. All temporal joins become plain old joins, with potentially dramatic (positive) consequences on execution cost.

Anti-join and Left Join of Interval Tables and Point Tables

Given the geometric interpretation of temporal inner join, temporal anti-join is easy to explain. Consider the anti-join of temporal table *r* with temporal table *s.* Draw a line segment for every row of *r*. Draw a line segment for every row of *s*. For every line segment of *r*, subtract all the overlapping line segments of *s*. The remaining line segments are the result of the anti-join. (Because line segments of *s* may fall completely inside some line segments of *t*, the packed result of the anti-join may in fact contain more rows than the input. See Temporal Projection for a discussion on packing.)

Left join is, by definition, the union of an inner join and the (*NULL* -padded) anti-join. What does that mean when computing the anti-join or (by extension) left join of an interval table and a point table? Subtracting a line segment from a point is easy. If the line segment overlaps with the point, the point is removed. Thus, as long as the point table is the left input of the anti-join or left join, the output is a point table and the semantics are obvious. But what if the point table is the right input of the anti-join or left join? One can subtract a point from a line segment in theory; the result is two line segments that exclude that point. But we cannot express this state of things under our data model. Discrete *valid_from, valid_to* fields with left-inclusive, right-exclusive semantics cannot express the absence of a single point. We could extend the data model, for example by allowing left-exclusive intervals. That would allow us to express intervals that miss points. But that extension or any equivalent extension would complicate the physical representation of validity intervals and thus the SQL implementation of any interval arithmetic or predicates. In the interest of simplicity and performance, we choose to keep the data model as-is and instead disallow anti-joins, left joins (and full outer joins) where the left input is an interval table, and the right input is a point table. These joins are undefined and shall raise a type error at compile time.

### OPAL - Observe Processing and Analysis Language

An example embodiment is powered by a state-of-the-art temporal relational model, built on top of a cloud scale data warehouse. Traditional attempts to model the time varying nature of system data on top of relational databases have ended up with nonstandard SQL extensions that become hard to use. The platform of an example embodiment solves this problem by providing a simple language for expressing the kinds of operations you want to do as a user of the system, taking care of the time-dependent factors. Additionally, the platform provides a GUI that lets users explore and filter the datasets without having to necessarily write any query code. For querying, OPAL is split into four parts:

1. Inputs, defining what data to look at
2. Verbs, defining what processing to do
3. Functions, defining how to transform individual datum
4. Output, defining what to do with the result of the query

These together make up an "OPAL Pipeline," also known as a "query."

### Inputs

The datasets read to execute the query are usually self-evident in the GUI. When you "explore" a dataset, that dataset becomes an input. When you *lookup* some field in another dataset, that additional dataset becomes another input to the query. A query can use as many inputs as you want, although the individual verbs may have limitations on how many inputs are consumed by that particular verb. One important constraint is that inputs cannot be separately processed before they are consumed by a verb. A single pipeline is a "straight pipe" and is, in technical speak, not a full directed acyclic graph (DAG.)

### Output

The query results are presented in a variety of ways. The GUI asks the back-end to calculate statistics such as top K values, histograms, or small line charts (sparklines) for each column in an output of a query. Additionally, a resource with many changes to its state may be "rolled up" into a single row in the GUI, by turning property changes into separate lists of mutations. In the GUI, this is all taken care of for you, but if you talk to the API of an example embodiment directly, you have to make decisions about how you want the data presented.

### Verbs

The "verbs" are the main actors in a query pipeline. Each verb takes a "main" input, which is the output of the verb before it in the pipeline. (The first verb takes the main, or first, dataset as input.) A verb can take additional datasets as input as well, such as used by the "lookup" verb. A verb outputs exactly one result, which can be seen as a temporary dataset (although it doesn't have the project, label, and ID of a persistent dataset.) The most important verb is the *filter* verb, which takes the default input, and applies some condition to the data, only returning data that matches the condition of the filter expression. This is analogous to the *WHERE* clause in a SQL query. Verbs may take one or more arguments, and are strung together using the pipe character: | An example pipeline is: *filter NUM_RESTARTS > 1 | lookup NODE_ID=@nodes.UID node_name:@nodes.NAME.* This would first filter resources where the *NUM_RESTARTS* field is greater than 1, and then use the *NODE_ID* field to look up a *NAME* in a second dataset (nodes) to create the new column *node_name* in the result.

Functions

The "functions" act, not on datasets or streams of resources, but on individual values. Where the Verbs are "set" operations, acting upon inputs sets, and returning output sets, the functions are "scalar" operations, returning single values. There are three kinds of functions:

1. Plain functions (called "scalar" functions) such as converting from a text representation to a timestamp, or comparing two values to get the largest one.
2. Summarizing functions (called "aggregate" functions) that calculate some summary of multiple values across multiple input rows. These must be used in an aggregating verb such as *statsby* to make sense. An example is *avg()* which calculates the average of some column across all the input rows that match the *statsby* grouping criteria. (This is similar to *GROUP BY* in a SQL query.)
3. Encompassing aggregate functions. These are a shortcut to calculating an aggregate across the entire input set. For example, *maxall()* returns the maximum value of a field or expression across all input rows, without having to use an explicit *statsby* or sub-query. For example, to find pods where the number of restarts is more than twice the average value, try this: *filter num_restarts > avgall(num_restarts)\*2*

Generally, functions can take expressions as arguments, and can be part of expressions. *max(num_hosts+3)* is just as valid as *max(num_hosts)+3.*

Expressions

For each verb and function argument, OPAL accepts a fairly straightforward set of expressions. For example, simple arithmetic is done with +, -, /, and \*. For example, *2 + 3 \* 4/5 - 6.* Comparisons are equally straightforward: (e.g., *num_errors > 3, name <= "hello", pi <> 3.14*). Fields in the default input dataset are referenced using their simple names: (e.g., *label, @.label*) (Those two references mean the same thing - the column "label" within the main input record).
Field references are case insensitive when used as "bare words" like this. There are ways to index into fields like JSON objects that are case sensitive, such as: *@.some_object.some_field["Another Key Name"]*
A field reference in a separate input dataset (such as used for joins) is identified by the bound name of that other dataset: *lookup me = @you.value newcol:expression(@you.field)*
This would use the field *me* from the main record, and look up the record/s in the dataset *you* where the field *value* matches the me value. For each of those records, the value of *expression(field)* will be calculated, and finally returned as the new column *newcol* in the output dataset. This is a powerful way of augmenting datasets with additional information. The expression form *name:value* is called a "column binding."

Argument lists

Functions are called by wrapping the argument list in parentheses, and separating them with commas (much like C, JavaScript, Python and many other languages.) (e.g., *search(message, "some text")*). Meanwhile, verbs do not use parentheses around their arguments, but they do separate their arguments with commas: (e.g., *coldrop fields, extra*).

Data Types

Basic data types are: integers, floating point, string, and boolean (e.g., "a *string*", '*another string'*, *123, 0x123, 4.5e-6, false*). Additionally, OPAL supports "text search expressions" and "regular expressions" (ANSI SQL/Oracle format only, not PCRE). These can be tested against a given column: (e.g., *filter message ~ <text search> and message ~ /regular.\*expression/*). You can also apply the text search expression against every searchable field in the row: (e.g., *filter <text search>*). This particular example will pass through every record where any searchable text matches the given search expression. Search expressions have a simple syntax: (e.g., *filter <some words>, filter <some "words with spaces">, filter <some words or "other words">*). Note that the word *or* is special in the search syntax, and means "the thing on the left, or the thing on the right." If you want to search for the word *or* then enclose it in quotes: (e.g., *filter <"or">*).

### Comments

Comments start with two slashes //and extend to the end of the line. You can put a comment wherever you can put whitespace in the language. This means that slashes inside a string literal do NOT start a comment. (e.g., *filter true // this lets through all rows, filter message = "//this is not a comment"// this lets through only matching values*).

### Datasets and Time

An example embodiment collects all data (system and application logs, metrics, and tracing spans) into observations, which are transformed into datasets. Datasets are structured with times or time intervals, as well as links (relations) to/from other datasets. Having these links (relations) between different parts of the system is what gives an example embodiment superpowers when discovering the meaning hidden in the data.

### Datasets

A dataset lives within a named project, and in turn has a name. Project names must be unique within your customer, and dataset names must be unique within their project. When you log into an example embodiment, you are shown the "Explore" page which lets you browse the different datasets that exist for your customer id. A dataset has a schema (a set of named columns and the type of data stored in those columns) and a type: "table," "event," or "resource." The type is determined mainly by how much time-related information is available about the dataset.

### Table Datasets

If information is not related to time and changes over time are not tracked, a dataset is a "table." This is like a normal look-up table in most systems, but is the kind that is used the least in an example embodiment because it doesn't allow tracking changes over time.

### Event Datasets

If something happens "at a time" and has a well-defined timestamp, then the dataset is an "event dataset." Events have a single point in time, and typically link (relate) to one or more other tables in the system. For example, "user X logged into system Y at time Z" is an event, which also links to the "user" dataset and the "system" dataset.

### Resource Datasets

Finally, objects that have permanence over time, and whose state changes over time, are stored in "resource datasets." Any field value for a resource has a validity time interval - a start time, and an end time. For a resource, you can ask questions like "what was the name at time T?" Additionally, a resource is identified by a primary key.

### Resource Times

For values that have recently changed and will be valid "until later changed," the end time is unknown and assumed to be in the distant future. For values inherited at the start of time, the start time is unknown, and is assumed to last since the dawn of time.

### Resource Primary Keys

This may be a GUID assigned to the resource, a user ID assigned in some database, or a MAC address of a network interface; whatever makes sense for that particular resource. Primary keys may be composite - consists of a number of fields taken together. For example, the primary key for a particular disk device may be the "host ID" of the host the disk is attached to, and the "disk index" within that host, such as *host-3, /dev/sdc.*

### Temporal Splicing

Definition

For an interval temporal (aka "resource") dataset *X,* here we define what it means to "splice" it with another interval temporal dataset *Y* at time *T.* On a high level, the operation means "take states from *X* before *T* and take states from *Y* after *T* and merge them together". It is used for stream processing to update a temporal dataset beyond a point in time. In the following visualized example, each colored bar represents one row and the bar's range on the x-axis corresponds to its *valid_from* and *valid_to.* The spliced result contains the following:

- Green bar in *X:* any row in *X* where *valid_to* < *T*

- Green bar in *Y:* any row in *Y* where *valid_from* > *T*

- Blue bar in *X:* any row in *X* where *valid_from* < *T* and *valid_to* >= *T* and there is no matching row in *Y* where *valid_from* <= *T* and *valid_to* > *T.* Also truncate *valid_to to T.*
  ◦ This can happen when we receive a deletion event for a resource at time *T*. In such case, the blue bar in *X* is the original duration of the resource, and in the final spliced result we need to truncate the resource at time *T*.

- Purple bar in *Y:* any row in *Y* where *valid_from* <= *T* and *valid_to* > *T* and there is no matching row in X where *valid_from* < *T* and *valid_to* >= *T.* Also update *valid_from to T.*
  ◦ Normally, the purple bar would have *valid_from* = *T* (a new resource is created by an event received at *T*). The case where *valid_from* < *T* might occur when we receive a very late event and we would want to enforce the "immutable-ness" of history. In such case *T* = *watermark,* and we truncate the resource to make sure no state before the watermark is modified.

- Red bar in both *X* and *Y:* rows in *X* where *valid_from* < *T* and *valid_to* >= *T* inner natural join with rows in *Y* where *valid_from* <= *T* and *valid_to* > *T.* In the join result adopt *X*'s *valid_from* and *Y*'s *valid_to.*

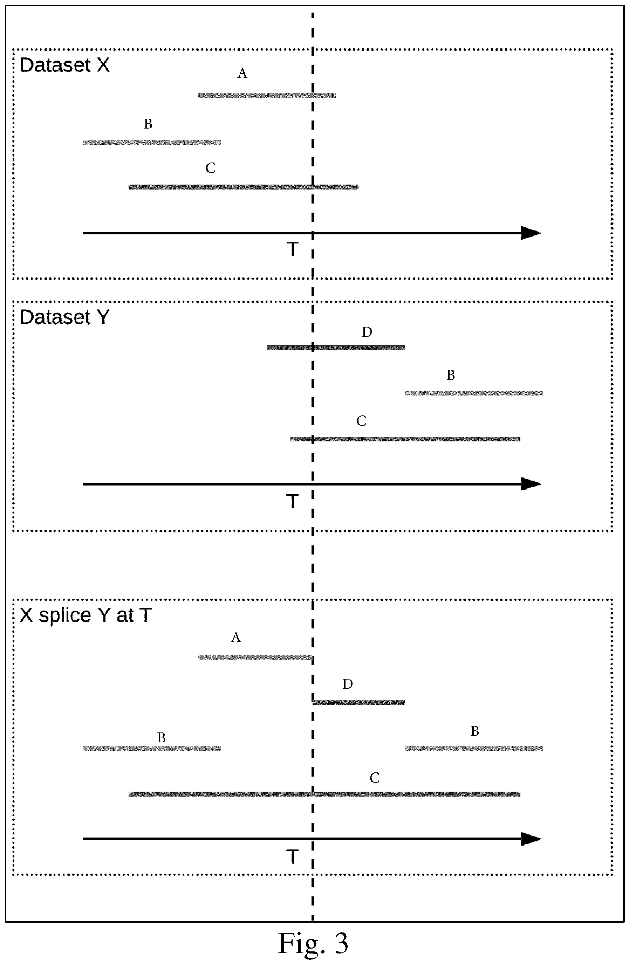

An example is shown in Fig. 3 where blue, green, red and purple are labelled A, B, C and D, respectively.

Example

Table X

| Row ID | Valid_from | Valid_to | Key |
|--------|-----------|----------|-----|
| 1 | 1 | 5 | A |
| 2 | 1 | 2 | B |
| 3 | 4 | 7 | C |
| 4 | 2 | 3 | D |
| 5 | 5 | 6 | E |
| 6 | 2 | null | F |

Table Y

| Row ID | Valid_from | Valid_to | Key |
|--------|-----------|----------|-----|
| 1 | 2 | 6 | A |
| 2 | 3 | 5 | B |
| 3 | 1 | 7 | C |
| 4 | 3 | 5 | D |
| 5 | 6 | 7 | E |
| 5 | 2 | null | F |

Splice X with Y at time 3

| Row ID | Valid_from | Valid_to | Key |
|--------|-----------|----------|-----|
| 1 | 1 | 6 | A |
| 2 | 1 | 2 | B |
| 3 | 3 | 5 | B |
| 4 | 3 | 7 | C |
| 5 | 2 | 5 | D |
| 6 | 6 | 7 | E |
| 7 | 2 | null | F |

Merge-based implementation

The idea is to allocate a unique "row_id" for X and generate a "merge instruction table" with fields like *is_changed* and *is_deleted* to instruct what the merge should do on a per-row basis. Here is a naive example by simply calculating each case and union them together. We can probably do better than this by replacing the union with a full outer join.

A SQL example is shown below.

```
merge into x
using (
     with crossing_x as
     (
     select
          row_id,
          valid_from,
          $threshold as valid_to,
          key
     from x
     where x.valid_from < $threshold and ifnull(valid_to, $max_time) >= $threshold
),
     exclusive_x as
     (
     select *
     from x
     where valid_from >= $threshold
     ),
     crossing_y as
     (
     select
          $threshold as valid_from,
          valid_to,
          key
     from y
     where y.valid_from <= $threshold and ifnull(y.valid_to, $max_time) > $threshold
),
     inclusive_y as
     (
     select
          *
          seq.nextval as row_id
     from y
     where y.valid_from > $threshold ),
     border_x as
     (
     select *
     from crossing_x
     where key not in (select key from crossing_y) ),
     border_y as
```

```
(
select
        *
        seq.nextval as row_id
from crossing_y
where key not in (select key from crossing_x) ),
merged_xy as
(
select
        x.row_id as row_id,
        x.valid_from as valid_from,
        y.valid_to as valid_to,
        x.key as key
from crossing_x x
join crossing_y y on
x.key = y.key
)
select
        row_id,
        valid_from,
        valid_to,
        key,
        true as is_deleted,
        false as is_changed
from exclusive_x
union
select
        row_id,
        valid_from,
        valid_to,
        key,
        false as is_deleted,
        false as is_changed
from inclusive_y
union
select
        row_id,
        valid_from,
        valid_to,
        key,
        false as is_deleted,
        true as is_changed
from border_x
union
select
        row_id,
        valid_from,
        valid_to,
        key,
        false as is_deleted,
        false as is_changed
from border_y
union
select
        row_id,
        valid_from,
        valid_to,
        key,
        false as is_deleted,
        true as is_changed
from merged_xy
) x_update
on
```

```
        x.row_id = x_update.row_id and
        ifnull(x.valid_to, $max_time) >= $threshold
when matched and x_update.is_changed then
update set
        x.valid_from = x_update.valid_from,
        x.valid_to = x_update.valid_to
when matched and x_update.is_deleted then
delete
when not matched then insert
(row_id, valid_from, valid_to, key) values
(x_update.row_id, x_update.valid_from, x_update.valid_to, x_update.key);
```

In this example, because we also need to use Xto produce the "merge instruction table" which is then used to merge into *X,* snowflake would scan *X* twice. Fortunately, both scans are pruned based on *valid_to* so in practice this scan should be limited to a few out-of-order ones and the current ongoing resources.

One caveat of this is that *MERGE* doesn't allow us to duplicate rows on the target side. So if the inner join (*merged_xy*) produces more than one hits on the left side, we would run into the non-deterministic update problem. On the other hand, although having overlapping temporal relations is not strictly prohibited, it should not occur naturally in practice. Hopefully we can address this problem by de-duping the temporal relations beforehand.

Aggregation in Temporal Relational Algebra

Because our temporal relational model has multiple dimensions, aggregation can happen across either dimension - we can aggregate over time, or we can aggregate over identity, or we can aggregate over both. This is similar to how *join* has different valid implementations depending on desired semantics.

The verb implementing aggregation over time is *statsby* and the verb implementing aggregation through time is *timestats.* To illustrate, let's assume we have two resources, "foo" and "bar," and they each have an IP address assigned to them:

| IP Address | time: | | | | |
|---|---|---|---|---|---|
| **resource** | **t1** | **t2** | **t3** | **t4** | **t5** |
| foo | 10.0.0.1 | 10.0.0.1 | null | 10.0.0.2 | 10.0.0.2 |
| bar | 10.0.0.2 | 10.0.0.3 | 10.0.0.3 | 10.0.0.3 | 10.0.0.1 |

The expression *statsby resource, count:countdistinct(ip)* will return:

| resource | count |
|---|---|
| foo | 2 |
| bar | 3 |

(This is assuming the flavor of *countdistinct* that doesn't count null values). Similarly, *statsby count:countdistinct(ip)* will simply return a table with *count:3.* This is not a resource or event; this is a simple data table, because the time dimension is collapsed. The expression *timestats true, count:countdistinct(ip)* will return:

| resource | t1 | t2 | t3 | t4 | t5 |
|---|---|---|---|---|---|
| true | 2 | 2 | 1 | 2 | 2 |

This is actually a resource, the singleton resource "the result of this timestats query," signified by the instance *true.* Note that you could express *timestats resource, count:countdistinct(ip)* although this would be a pretty trivial query, returning 1 in cells with a value, and 0 in cells without a value in the input dataset above. However, when resources also have additional attributes, such as "pod running on node" or "cluster" or whatnot, then you could calculate aggregates by grouping attributes through time to generate a non-trivial result, so this is still useful. *statsby* also makes sense on event datasets and datatables. We don't currently know of a useful definition of *timestats* for events or data tables.

### Jittery edges

The edges between "cells" in the "time grid" across many resources will be quite jittery, because generally, resources may change their state close in time to each other, but not at exactly the same times. To generate an easier-to-read result, and for various analytic functions, we also need to support "bucketing" or "binning" or "gridding" and "alignment." The basic *align* function is a re-sampling function that takes an input resource dataset (or event set) and re-samples it at a regular grid, the size of which is an argument to the *align* verb. When a resource has multiple values within a single bucket, intermediate values are lost, and the value of an attribute at the beginning of each bucket interval is what's sampled into the output resource state.

The output is still a resource (it has validity intervals, and primary keys,) except it's a different resource kind ("the time-aligned resource version of the input resource") than the original resource. An example is shown below for the input resource table. In a slightly different table form than for the previous resource examples, "attribute" is the value of the attribute named "attribute".

| resource | time | attribute |
|----------|------|-----------|
| foo | 0.00 | 2 |
| bar | 0.00 | 4 |
| foo | 1.2 | 3 |
| bar | 1.9 | 5 |
| foo | 2.4 | 4 |
| foo | 3 | 5 |
| bar | 3.1 | 6 |

The output after *align 1* would be:

| resource | time | attribute |
|----------|------|-----------|
| foo | 0.00 | 2 |
| bar | 0.00 | 4 |
| foo | 2 | 3 |
| bar | 2 | 5 |
| foo | 3 | 5 |
| bar | 4 | 6 |

The value for *bar* at time *4* might or might not be included, depending on the time range of the query. The real implementation of *align* takes a time duration and bucketizes time since epoch to that duration and samples the values of attributes at the beginning of each of those buckets, so you'd probably see something like *align duration("1m") or align nanoseconds(1000000000)*.

### Traditional bucketing

Bucketing of events and metrics aren't well served either by *timestats* or by *align - timestats* generates one output row for each possible change time in the input, and *align* loses data when it downsamples (e g, you may want a "sum" within a bucket, rather than "one value" within that bucket.) The most correct way to implement this is a third way of summarizing across time; something like *alignedstats* but this may be a challenge to explain to users. _Or maybe the UI just knows what's going on and does the right thing, and users don't need to be explained to.) *alignedstats* would be like a combination of *align* and *timestats* except it would not discard samples but instead calculate the output value for each bucket. Also, it might have different behavior of output values in grid cells that have no change - we have the two different usages of "if there's no event in the bucket, you get null" and "event values are gauges, and should stay valid until next gauge, or timeout, occurs." When we introduce metrics as a first-class datatype, we may need to arrange for a better way to transform into those, too, and we're not yet sure exactly what that will look like.

Traditional bucketing implemented - *timechart*

The implementation of *alignedstats* ends up being called *timechart* and generates a grid across the organizing key cross the buckets over time, and then aggregates all values that intersect with any particular bucket. Note that traditional aggregation functions like *count* or *average* may not give the result the user actually expects - there is a need for a separate time weighted version of such aggregates. An example is *count* with hourly buckets. If I have four items that span the entire bucket, and two items that only overlap the first 10 minutes of the bucket, I could say that I have six items that intersect the bucket (this is regular *count*) or I could say that I have four and two sixths items within the bucket (this is time-weighted *count*).

Selecting/filtering in temporal algebra and the object model

Consider an input resource. This picture illustrates a resource table with a "primary key" defined as a host name ID, a time stamp, and two attributes for this "host" resource. The illustration shows the table itself, as well as CPU pivoted by host ID and time, for illustration purposes.

| Time | ID | CPU | Mem |
|------|------|-----|-----|
| 10:01 | host1 | 0.1 | 32 |
| 10:01 | host2 | 0.6 | 31 |
| 10:01 | host3 | 0.5 | 30 |
| 10:02 | host1 | 0.3 | 33 |
| 10:02 | host2 | 0.4 | 34 |
| 10:02 | host3 | 1.0 | 30 |
| 10:03 | host1 | 0.5 | 31 |
| 10:03 | host2 | 0.2 | 33 |
| 10:03 | host3 | 1.0 | 31 |

|       | host1 | host2 | host3 |
|-------|-------|-------|-------|
| 10:01 | 0.1 | 0.6 | 0.5 |
| 10:02 | 0.3 | 0.4 | 1.0 |
| 10:03 | 0.5 | 0.2 | 1.0 |

If we consider the dimensions of "primary key," and "time," and "predicate truthiness," there are really three different ways of selecting data out of this table.

Single Rows

The simplest one, which we have until now called *filter,* returns the rows outlined in red (which matches the cells outlined in red in the pivot illustration) for the expression *filter CPU >= 0.6.* In an effort to match industry standard, we will rename filter to: *where* for resources returns exactly the resource rows where a given predicate matches for the resource at the time. Note that, if the result is *colpick* -ed such that the "memory" value is not returned, the return values for *host3* that contain the CPU value 1.0 will be packed by the successive transform pipeline.

Resource Instances

In addition, we may want to work with all data for the set of resources that meet some criteria. That criteria can be either "matches some predicate at some point," or "never matches a given predicate." These two criteria together make it possible to construct the full set algebra. Note that "Does not match some predicate at some point," is NOT a necessary building block (and also not sufficient in the absence of "never/always matches some predicate.") For the criteria of "matches some predicate at some point," we need the following verbs: ever implements "all resource data for resources that at some point matched the predicate" *never* implements "all resource data for resources that at no point matched the predicate" *always* implements "all resource data for resources that at all times matched the predicate" An observation is that *always* is an alias for *never not* but including it makes reading code easier. There's also a question of what to do when data points are missing for the *always* verb - a subtle difference between *always* and *never not* might be that the former might exclude resources that have data gaps. The table set forth above illustrates the cells returned for *ever CPU >= 0.6*. You can see in the time/primary key pivot that these map to vertical columns in the pivot table illustration. Note that, if the result is colpick -ed such that the "memory" value is not returned, the return values for host3 that contain the CPU value 1.0 will be packed by the successive transform pipeline.

Time Intervals

The final dimension is time. It may be useful to work on all time windows (all data across resources) where some condition held true for SOME resource. This is illustrated in the table set forth above for the condition where CPU < 1.0. The verb *when* implements "data for all times when a predicate held true for some resource" This is illustrated in the table set forth above for the condition where CPU < 1.0. Again, note that temporal packing may modify (and slice) the number of rows returned depending on the actual alignment of resource data rows.

Other dataset kinds

The Resource algebra sits on top of the base temporal algebra, because it always considers the two-dimensional construct of "primary key" and "time." Base temporal algebra is defined without any notion of primary key. One way of thinking about the above operations is to interpret them as working on temporal datasets with a defined primary key, and they will implicitly add the primary key as a grouping/join selector. We could, in the future, extend these operators to work on datasets with no primary key (where each row is the key) in a consistent manner, in which case they reduce to underlying temporal algebra selections.

Notes on emitting bundles

A customer sends us observations, not bundles. Often, they will have an existing integration which is already pumping out data. This data may be composed of a JSON blob and some extra metadata (e.g.,: honeycomb emits newline delimited JSON blobs, but passes some metadata through the URL path and query parameters). (e.g.,: elastic has a custom format whereby data can be preceded by a common metadata preamble (the *index* and *type* fields). Customers interact with example embodiments through working with observations. On ingest however, we pack these observations into bundles: the only bundle field under control of customers is the observations list. We need to limit how large these bundles get, because we have constraints when emitting them further down the processing pipeline (e.g., kafka). A bundle carries alongside it request-scoped metadata, which is closely linked to the transport (http, grpc, raw socket, timestamps at different stages of ingest pipeline, auth info). We want to decouple as much as possible the responsibility for parsing customer input into observations, from packing observations into bundles. The current suggested interface to handle inbound processing is an Emitter, defined in proto3/bundlepb:

```
type Emitter interface {
    Emit(context.Context, ...*Observation) error
}
type EmitterFunc func(context.Context, ...*Observation) error
```

An integration handler responsible for parsing input can just call the *Emit* function once it is done. This will generate at least one bundle (or error). A handler has some influence on bundling since it can break up observations across calls to *Emit*. Information used to populate the bundle is carried alongside the request context. This avoids situations like in msgq_ingestor.go, where we have to copy bundles to insert the customer-id:

```
for i, b := range ir.Bundles {
        //Add customer ID and ingestion time to bundle metadata. We need to clone
        // the bundle because there may be other ingestors concurrently working
        //with the bundle.
        b = proto.Clone(b).(*bundlepb.Bundle)
        if b.Metadata == nil {
        b.Metadata = make(variantpb.VDict)
        }
        b.Metadata["customer_id"] = customerlDVariant
        b.Metadata["ingestion_time"] = ingestTimeVariant
        // Encode the bundle.
        msgs[i].Message, err = bundle.Encode(ing.msgKey, b)
        if err != nil {
        err = fmt.Errorf("bundle.Encode() failed: %s", err)
        return err
        }
    }
```

We now pass the context explicitly across function calls, so we can instead delay the construction of the bundle until we pass it onto a channel, or directly to kafka. Helpers to manipulate context have the following general pattern in proto/bundlepb:

```
type contextKey string
var bundleKind = contextKey("kind")
func SetBundleKind(ctx context.Context, kind string) context.Context {
        return context.WithValue(ctx, bundleKind, kind)
}
func getBundleKind(ctx context.Context) (string, bool) {
        v, ok := ctx.Value(bundleKind).(string)
        return v, ok
}
```

Once we are ready to create a bundle, use *FromContext*:

```
func FromContext(ctx context.Context, obs []*Observation) *Bundle {
        kind, _ := getBundleKind(ctx)
        timestamp, _ := getBundleTimestamp(ctx)
        observer, _ := getBundleObserver(ctx)
        metadata, _ := getBundleMetadata(ctx)
        return &Bundle{
                BundleKind: kind,
                BundleTimestamp: timestamp,
                Observerld: observer,
                Observations: obs,
                Metadata: metadata,
        }
    }
```

Temporal Selection

This section describes data selection on the time dimension, a.k.a. temporal selection. A temporal select can either be a point select or an interval select. A point select returns only data at a specific point in time. An interval select returns data within an interval in time. We can interpret temporal selection geometrically as follows. Suppose there is an input table *R*. For each row in *R*, draw a corresponding line segment from points *valid_from* to *valid_to*, along the (infinite) time axis. If *R* is a point table, draw a point at the respective timestamp. Draw a point or an interval corresponding to the temporal selection predicate. Call that point or interval *t*. Finally, for each line segment *r* in *R* which overlaps with *t*, draw the intersection of *r* and *t*. The set of intersections produced hereby is exactly the result of the temporal selection (technically, it is isomorphic to the temporal selection). Note that temporal selection does not simply return all rows of *R* that overlap with *t*. It returns the intersection of these rows with *t*. All returned rows' time points or intervals are contained in *t*.

Examples:

| R | | |
| --- | --- | --- |
| **valid_from** | **valid_to** | **x** |
| -inf | 2 | 1 |
| 3 | 4 | 1 |
| 5 | inf | 1 |
| -inf | inf | 2 |
| 4 | 5 | 3 |

| tselect(R, 4) | |
| --- | --- |
| **t** | **x** |
| 4 | 2 |
| 4 | 3 |

| tselect(R, 5) | |
| --- | --- |
| **t** | **x** |
| 5 | 1 |
| 5 | 2 |

| tselect(R, [3, 6)) | | |
| --- | --- | --- |
| **valid_from** | **valid_to** | **x** |
| 3 | 4 | 1 |
| 5 | 6 | 1 |
| 3 | 6 | 2 |
| 4 | 5 | 3 |

```
SQL Implementation
  create or replace table r (
      valid_from number(19,0),
      valid_to number(19,0),
      x number
  );
  insert overwrite into r values
      (null, 2, 1),
      (3, 4, 1),
      (5, null, 1),
      (null, null, 2),
      (4, 5, 3);
  -- point selection: 4
 select 4 as t,
      x
  from r
  where (valid_from is null or valid_from <= 4)
      and (valid_to is null or valid_to > 4);
```

```
-- point selection: 5
    select 5 as t,
    x
from r
    where (valid_from is null or valid_from <= 5)
    and (valid_to is null or valid_to > 5);

-- closed interval selection: [3, 6)
select greatest(ifnull(valid_from, 3), 3) as valid_from,
    least(ifnull(valid_to, 6), 6) as valid_to,
    x
from r
where (valid_from is null or valid_from <= 6)
    and (valid_to is null or valid_to > 3);
-- open interval selection: [3, inf)
select greatest(ifnull(valid_from, 3), 3) as valid_from,
    valid_to,
    x
from r
where (valid_to is null or valid_to > 3);
```

The *where* clauses are simple enough for Snowflake to perform static pruning. The *greatest* and least functions are an elegant way to perform the interval intersection. Note the use of *ifnull* because *greatest* and least return *null* if any input is *null.* In that sense, they behave differently than the *min* and *max* aggregate functions (which ignore *null* input). Finally, note the use of *greatest(ifnull(* and *least(ifnull(* instead of the equivalent *ifnull(greatest(* and *ifnull(least(.* According to microbenchmarks, the former order of functions is noticeably more efficient. The reason is that *greatest* and least have a separate, more efficient implementation for non-nullable input. *ifnull* with a non- *null* second argument makes the input to *greatest* and least non-nullable, so the Snowflake compiler can pick that more efficient implementation. Indeed, it is a good heuristic to always make *ifnull* the innermost function in a compound expression, not just when *greatest* and least are concerned. Most functions and operators in Snowflake have optimized implementations for non-nullable input.

Algebraic Optimizations

As the examples above show, a point select on an interval table returns a point table. So temporal select is one way to change the "temporal type" of a table. What is more, all the rows returned by a point select share the same timestamp. So the point table is in fact a snapshot table. Knowledge of snapshot tables is important to the query compiler of an example embodiment, because the compiler may choose non-temporal operators (regular relational algebra) when processing snapshot tables. What is more, joins with snapshot tables always return snapshot tables. It follows that point selects are an important source of algebraic optimizations and should be pushed down as far in the query plan as possible. Interval selects are also useful for optimization. As explained above, any time interval returned by an interval select must be contained by the interval used in the selection predicate. Inner joins are associative and commutative, and so is interval intersection. Therefore, any time interval returned by a tree of temporal inner joins must be contained by the intersection of the time intervals used in the selection predicates on the input tables. The compiler can use this algebraic fact to compute the combined (intersected) selection interval at compile-time, and push it down every branch of the join tree to enable static pruning and lower execution cost. See Data Model for more information on the join semantics of snapshot tables and interval tables. Finally, as can also be seen in the examples, temporal selection on a packed table always produces a packed table. The reason is that the intervals of the output rows are contained by the intervals of the input rows. So if any two intervals do not meet or overlap in the input, they also cannot meet or overlap in the output. See Temporal Deduplication (DISTINCT) for the definition of packed.

Temporal Projection

Projection is the simplest relational operator along with Selection_Filter). It picks a subset of columns, e.g., attributes from a given table. Temporal projection is quite a bit more interesting than regular relational projection, because performing a regular relational projection on a packed interval table can result in an output table that is no longer packed.

Pack

Let us define an interval table as packed if, for every row of that partition, there is no other, non-distinct row with overlapping or adjacent validity interval. We write "non-distinct" rather than "equal" to cover the possibility of *NULL* attributes. *NULL is not distinct from NULL* evaluates to *true* in SQL, while *NULL = NULL* evaluates to *NULL* which decays to false. Validity intervals of two rows are adjacent if the *valid_to* field of one row is equal the *valid_from* field of the other row. As an example, the following table is not packed, because the second row is adjacent to the third row at time 5, and both the values of *x* and *y* are not distinct.

| valid_from | valid_to | x | y |
|---|---|---|---|
| -inf | 3 | 1 | 1 |
| 4 | 5 | 1 | 1 |
| 5 | 6 | 1 | 1 |
| 6 | 10 | 1 | 2 |
| 5 | 6 | 2 | 2 |

The table becomes packed by merging the second and third row:

| valid_tom | valid_to | x | y |
|---|---|---|---|
| -inf | 3 | 1 | 1 |
| 4 | 6 | 1 | 1 |
| 6 | 10 | 1 | 2 |
| 5 | 6 | 2 | 2 |

Note that the original and packed table are semantically equivalent. Pack is a no-op in a semantic sense. Nonetheless, it is important for performance as we shall explain. Pack can be implemented in SQL as follows:

```
-- replace NULL timestamps
with r_bounded as (
        select ifnull(valid_from, -9223372036854775808) as valid_from,
                ifnull(valid_to, 9223372036854775807) as valid_to,
                x,
                y
        from r
),
-- find adjacent, non-distinct rows
r_prewindowed as (
        select valid_from,
                valid_to,
                x,
                y,
                lag(valid_to) over (partition by x, y order by valid_from) as valid_to_prev,
```

```
            -- a new window starts whenever subsequent rows in time order are not adjacent
            valid_from is distinct from valid_to_prev as window_starts
        from r_bounded
),
-- assign window IDs based on window boundaries
r_windowed as (
        select valid_from,
            valid_to,
            x,
            y,
            -- running sum to convert window_starts to window_id
            sum(iff(window_starts, 1, 0)) over (partition by x, y order by valid_from) as window_id
        from r_prewindowed
)
-- compress each window to a single row
select nullif(min(valid_from), -9223372036854775808) as valid_from,
        nullif(max(valid_to), 9223372036854775807) as valid_to,
        x,
        y
from r_windowed
group by window_id, x, y;
```

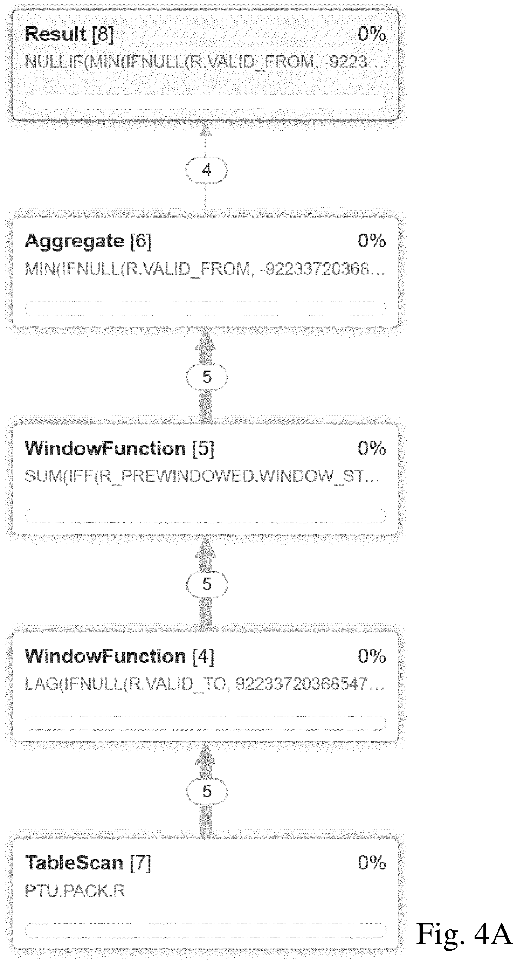

The query plan in Snowflake is shown in Fig. 4A. One can see the two *WindowFunction* operators (PartitionOrderBy) and the final *Aggregate* operator (GroupBy), which exactly mirrors the structure of the SQL. The SQL implementation above is deterministic under the assumption that there are no temporal duplicates in the data; that is, there are no non-distinct rows with overlapping validity intervals.

Below is an example of a non-deterministic Pack operation. The second and third row overlap in time, so the first row may be merged with either the second row (bottom left result) or the third row (bottom right result).

| valid_from | valid_to | x | y |
|---|---|---|---|
| -inf | 4 | 1 | 1 |
| 4 | 5 | 1 | 1 |
| 4 | 6 | 1 | 1 |
| 6 | 10 | 1 | 2 |
| 5 | 6 | 2 | 2 |

| valid_from | valid_to | x | y |
|---|---|---|---|
| -inf | 5 | 1 | 1 |
| 4 | 6 | 1 | 1 |
| 6 | 10 | 1 | 2 |
| 5 | 6 | 2 | 2 |

| valid_from | valid_to | x | y |
|---|---|---|---|
| -inf | 6 | 1 | 1 |
| 4 | 5 | 1 | 1 |
| 6 | 10 | 1 | 2 |
| 5 | 6 | 2 | 2 |

The two possible results are semantically equivalent, no information is lost. Thus, Pack is a well-defined and safe operation, irrespective of temporal duplicates in the data.

Temporal Projection

It is easy to show by example that regular, relational projection of a packed interval table can result in an output table that is no longer packed:

| valid_from | valid_to | x | y |
|---|---|---|---|
| -inf | 3 | 1 | 1 |
| 4 | 6 | 1 | 1 |
| 6 | 10 | 1 | 2 |
| 5 | 6 | 2 | 2 |

| valid_from | valid_to | x | |
|---|---|---|---|
| -inf | 3 | 1 | |
| 4 | 6 | 1 | |
| 6 | 10 | 1 | |
| 5 | 6 | 2 | |

Projecting out column y caused the result table to be no longer packed, because the second row is adjacent to the third row at time 6, and there are no remaining attributes on which the rows differ. For completeness, here is the packed, projected table:

| valid_from | valid_to | x |
|---|---|---|
| -inf | 3 | 1 |
| 4 | 10 | 1 |
| 5 | 6 | 2 |

In the general case, relational projection followed by packing can result in a large number of input rows merging into a single output row. That insight is especially useful for temporal joins, because interval-overlap predicates are difficult to evaluate efficiently, see Temporal Join. By default, it is thus advisable to pack the result of relational projection before using it as input to a join. As an optimization, packing may be omitted in cases where our compiler decides that it is not necessary for correctness, and omitting it confers a performance advantage. For instance, if one is dealing with an immutable resource; i.e., a resource that never changes state so that for each distinct key there is exactly one row in the resource table; Pack will have no effect and should be omitted. As another example, our temporal join implementation produces a correct result even if the inputs are not packed. So if our compiler can determine from its statistics that the data is "mostly" packed (for example, by looking at the number of distinct keys vs. the number of rows), it may choose to perform the Pack operation after the join, or not at all.

Temporal Join

A temporal relational join is a generalization of a relational join. In addition to the regular join predicate (say, some equality predicate based on some foreign-key constraint), the join predicate of a temporal-relational join adds an implicit "overlaps" predicate over the validity intervals of the input rows. That is, for input tables $R$ and $S$, the validity intervals of rows $r$ in $R$, s in S must "overlap" for the joined row $rs$ to appear in the output. We can interpret such a join geometrically as follows. For each row in $R$, draw a corresponding line segment from points *valid_from* to *valid_to*, along an (infinite) time axis. Do the same for $S$. For each overlapping pair of line segments $r$ in $R$ and $s$ in $S$, draw the intersection of these input segments. The set of intersections produced hereby is exactly the result of the temporal join (technically, it is isomorphic to the temporal join). Now, assume that $R$ and $S$ each contain a column $k$, and we want to compute the temporal equi-join $R$ *join* $S$ *on* $R.k = S.k$. Such a temporal equi-join can easily be computed by partitioning both tables by $k$, then performing a pure temporal join (as described above) of each corresponding pair of partitions, and finally doing the union (all) of these individual join results. Alternatively, one could first perform a regular equi-join on $R.k = S.k$,

then partition the intermediate result by *k,* and finally evaluate the overlaps-predicate and intersection operation on each intermediate row. The reason for these different implementation options is that a temporal join has two dimensions: the key dimension (whatever regular join predicate is given), and the time dimension. One can choose to first handle the key dimension, or first handle the time dimension, or even interleave these dimensions in some fancy way. Which solution is the most efficient depends on the selectivity of the join on each dimension. All other things being equal, one always wants to evaluate the most selective predicate first. An example of a temporal inner equi-join is shown below:

| R | | | |
|---|---|---|---|
| valid_from | valid_to | a | x |
| -inf | 2 | 1 | 1 |
| 2 | 5 | 1 | 2 |
| 5 | 8 | 1 | 3 |
| 10 | inf | 1 | 4 |
| -inf | inf | 2 | 5 |

| S | | | |
|---|---|---|---|
| valid_from | valid_to | b | y |
| 3 | 4 | 1 | 1 |
| 6 | inf | 1 | 2 |
| 5 | 10 | 2 | 3 |

| R join S on R.a = S.b | | | | | |
|---|---|---|---|---|---|
| valid_from | valid_to | a | b | x | y |
| 3 | 4 | 1 | 1 | 2 | 1 |
| 6 | 8 | 1 | 1 | 3 | 2 |
| 10 | inf | 1 | 1 | 4 | 2 |
| 5 | 10 | 2 | 2 | 5 | 3 |

The main implementation challenge is how to translate the "overlaps" predicate into a join predicate that can be efficiently evaluated by a regular RDBMS, here Snowflake, but not limited to Snowflake. A surprisingly difficult sub-problem in this regard is how to represent *-inf* and *inf.* Efficient evaluation of the "overlaps" predicate requires a special join operator called a "band join". Snowflake has a native (but somewhat brittle) band join implementation.

Temporal Deduplication (DISTINCT)

Temporal Deduplication performs relational deduplication for every possible moment in time. Consider the following example:

| valid_from | valid_to | x | y |
|---|---|---|---|
| -inf | 3 | 1 | 1 |
| 4 | 7 | 1 | 1 |
| 5 | inf | 1 | 1 |
| 7 | inf | 1 | 1 |
| 6 | 10 | 1 | 2 |
| 8 | 9 | 1 | 2 |
| 5 | 6 | 2 | 2 |
| 5 | 6 | 2 | 3 |
| -inf | inf | 2 | 3 |

The table above contains a number of duplicates. The second row overlaps with the third row in the time interval C5, 7B. The third row overlaps with the fourth row in the time interval C7, inf) etc. The de-duplicated table looks as follows:

| valid_from | valid_to | x | y |
|---|---|---|---|
| -inf | 3 | 1 | 1 |
| 4 | inf | 1 | 1 |

(continued)

| valid_from | valid_to | x | y |
|---|---|---|---|
| 6 | 10 | 1 | 2 |
| 5 | 6 | 2 | 2 |
| -inf | inf | 2 | 3 |

Temporal Deduplication (*DISTINCT*) is loosely related to the Pack operation described in Temporal Projection. Pack merges non-distinct rows that are adjacent in time. De-duplication merges non-distinct rows that overlap in time. Temporal De-duplication can be implemented as shown below.

- Partition the table by all non-time attributes (here: *x, y*)
- For each partition, compute a running counter of the number of duplicate rows at every point in time
- Keep only those points of time (and attributes) for which the counter is greater than 0
- Pack the table

The actual SQL implementation does not expand the table into points of time, but instead transforms input rows into "row start" and "row end" events, just like the Anti-Join implementation. The Pack implementation can be copy-pasted from Temporal Projection. Here is the full SQL:

```
-- replace NULL timestamps
with r_bounded as (
        select ifnull(valid_from, -9223372036854775808) as valid_from,
                ifnull(valid_to, 9223372036854775807) as valid_to,
                x,
                y
        from r
),
-- convert resources to events
r_events as (
        select valid_from as ts,
                1 as inc,
                x,
                y
        from r_bounded
        union all
        select valid_to as ts,
                -1 as inc,
                x,
                y
        from r_bounded
),
-- compute running duplicate row count over events
r_counts as (
        select ts as valid_from,
                lead(ts) over (partition by x, y order by ts) as valid_to,
                sum(inc) over (partition by x, y order by ts) as cnt,
                x,
                y
        from r_events
),
```

```
-- keep only the windows where the row count is > 0, then pack
r_prewindowed as (
        select valid_from,
                valid_to,
                x,
                y,
                lag(valid_to) over (partition by x, y order by valid_from) as valid_to_prev,
                valid_from is distinct from valid_to_prev as window_starts
        from r_counts
        where cnt > 0
),
r_windowed as (
        select valid_from,
                valid_to,
                x,
                y,
                sum(iff(window_starts, 1, 0)) over (partition by x, y order by valid_from) as window_id
        from r_prewindowed
)
        select nullif(min(valid_from), -9223372036854775808) as valid_from,
                nullif(max(valid_to), 9223372036854775807) as valid_to,
                x,
                y
        from r_windowed
group by window_id, x, y;
```

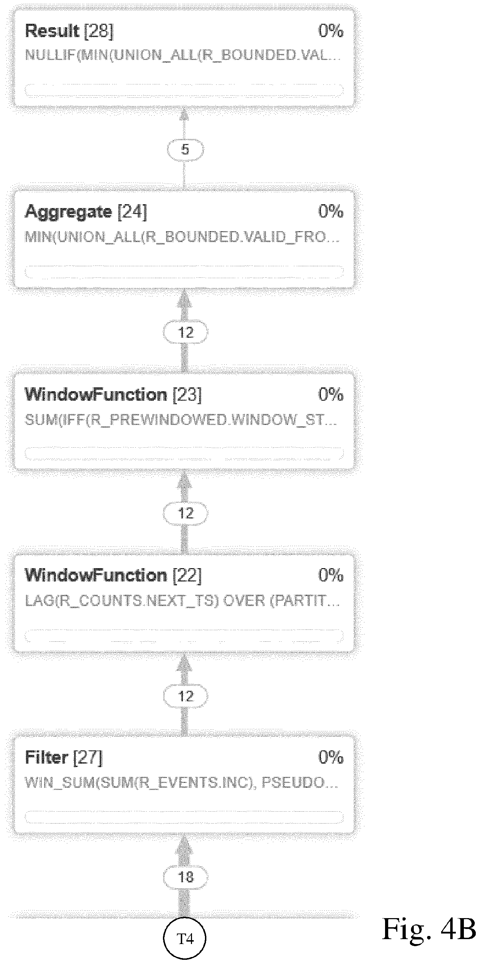

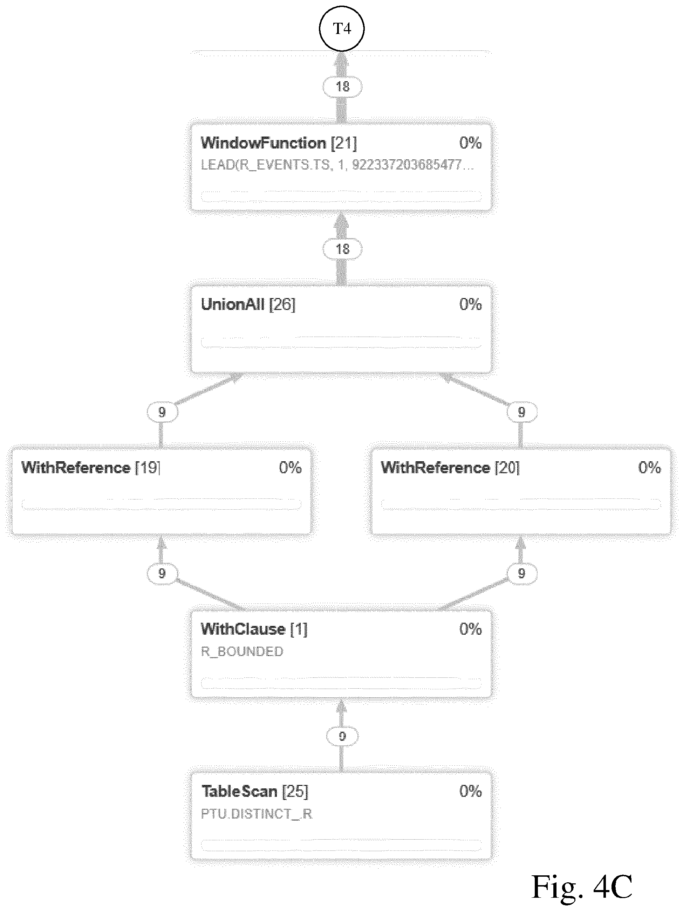

The Snowflake execution plan looks as shown in Figs. 4B and 4C. As shown in Figs. 4B and 4C, the *WithClause - UnionAll* diamond that converts the resources to events, followed by a *WindowFunction* for the running count (*WIN_SUM*), followed by the two *WindowFunction* and the final *Aggregate* operator for the Pack operation. So the plan exactly mirrors the structure of the SQL query. Temporal GroupBy

Temporal GroupBy behaves just like a regular, relational GroupBy, except it computes the desired grouped aggregates at every possible point in time. Consider the following example:

| valid_from | valid_to | x | y | z |
|---|---|---|---|---|
| -inf | 3 | 1 | 1 | 1 |
| 4 | 8 | 1 | 1 | 2 |
| 5 | inf | 1 | 1 | NULL |
| 6 | inf | 1 | 1 | 3 |
| 6 | 10 | 1 | 2 | 4 |
| 8 | 9 | 1 | 2 | 5 |
| 5 | 6 | 2 | 2 | 6 |
| 5 | 6 | 2 | 3 | NULL |

(continued)

| valid_from | valid_to | x | y | z |
|---|---|---|---|---|
| -inf | inf | 2 | 3 | NULL |

Here is the expected result for a *array_agg(z) GROUP BY x, y* query:

| valid_from | valid_to | x | y | array_agg(z) |
|---|---|---|---|---|
| -inf | 3 | 1 | 1 | [1] |
| 4 | 6 | 1 | 1 | [2] |
| 6 | 8 | 1 | 1 | [2,3] |
| 8 | inf | 1 | 1 | [3] |
| 6 | 8 | 1 | 2 | [4] |
| 8 | 9 | 1 | 2 | [4,5] |
| 9 | 10 | 1 | 2 | [4] |
| 5 | 6 | 2 | 2 | [6] |
| -inf | inf | 2 | 3 | [] |

Note how for every group of *x, y* pairs, we get a packed history of distinct *array_agg(z)* aggregate results. If we Select from the result table for a specific moment of time, the result of the Select will be exactly the result of performing a Select on the original input table for that moment of time, and then computing the regular, relational GroupBy on that.

Implementation

Computing Temporal GroupBy is somewhat expensive, because every input row defines its own window, and may overlap with many other rows and windows. That is just the nature of the operation. Here is the general idea:

- Convert every input row to a pair of event rows, one at *valid_from,* one at *valid_to.* Discard duplicate events.
- Partition the event rows by grouping key (*x, y*). Sort the partitioned event rows by timestamp. Every (sliding) pair of adjacent event rows defines a window.
- Perform a temporal join of the windows with the original input table, resulting in a mapping of windows to every overlapping input row.
- Aggregate the join result for each window.
- Optionally, pack the result.

The SQL looks as follows:

```
-- replace NULL timestamps
with r_bound as (
        select least(coalesce(min(valid_from), min(valid_to), 0),
                coalesce(min(valid_to), min(valid_from), 0)) - 1 as neginf,
        greatest(coalesce(max(valid_from), max(valid_to), 0),
                coalesce(max(valid_to), max(valid_from), 0)) + 1 as posinf
        from r
),
r_bounded as (
        select ifnull(valid_from, neginf) as valid_from,
                ifnull(valid_to, posinf) as valid_to,
                x,
                y,
                z
        from r, r_bound
),
-- convert resources to events
r_event as (
        select valid_from as ts,
                x,
                y
        from r_bounded
        union all
        select valid_to as ts,
                x,
                y
        from r_bounded
),
r_distinct_event as (
        select distinct ts,
                x,
```

```
                    y
            from r_event
    ),
    -- every event (except the last) defines a window
    r_prewindow as (
            select ts as valid_from,
                    lead(ts) over (partition by x, y order by ts) as valid_to,
                    x,
                    y
            from r_distinct_event
    ),
    r_window as (
            select *
            from r_prewindow
            where valid_to is not null
    ),
    -- join windows with overlapping resources, then aggregate
    r_agg as (
            select r_window.valid_from as valid_from,
                    r_window.valid_to as valid_to,
                    r_window.x as x,
                    r_window.y as y,
                    array_agg(z) within group (order by r_bounded.valid_from) as arr_z
            from r_window, r_bounded
            where r_window.x is not distinct from r_bounded.x
                    and r_window.y is not distinct from r_bounded.y
            -- "range within" join
            --and r_window.valid_from < r_window.valid_to
            --and r_bounded.valid_from < r_bounded.valid_to
            and r_window.valid_from >= r_bounded.valid_from
            and r_window.valid_from < r_bounded.valid_to
            --and r_window.valid_to <= r_bounded.valid_to
            group by r_window.valid_from,
                    r_window.valid_to,
                    r_window.x,
                    r_window.y
    ),
    -- pack (optional)
```

```
r_agg_prewindow as (
        select valid_from,
                valid_to,
                x,
                y,
                arr_z,
                lag(valid_to) over (partition by x, y, arr_z order by valid_from) as valid_to_prev,
                valid_from is distinct from valid_to_prev as window_starts
        from r_agg
),
r_agg_window as (
        select valid_from,
                valid_to,
                x,
                y,
                arr_z,
                sum(iff(window_starts, 1, 0)) over (partition by x, y, arr_z order by valid_from) as window_id
        from r_agg_prewindow
),
r_agg_packed as (
        select min(valid_from) as valid_from,
                max(valid_to) as valid_to,
                x,
                y,
                arr_z
        from r_agg_window
        group by window_id, x, y, arr_z
)
        select nullif(valid_from, neginf) as valid_from,
                nullif(valid_to, posinf) as valid_to,
                x,
                y,
                arr_z
        from r_agg_packed, r_bound;
```

Note that the SQL above uses *array_agg(z) within group (order by r_bounded.valid_from)* to make the result of *array_agg* ordered by time. That is just to illustrate that one can perform any kind of unordered or ordered aggregation supported by Snowflake.

Optimizing the Join

The join between the windowed groups (*r_window*) and the original input (*r_bounded*) is noteworthy, because it is an "interval within" join as opposed to the usual "interval overlaps" join discussed in Inner Join. An "interval overlaps" join would be correct as well, but we know that the time intervals of windowed groups must fall within the time intervals of matching rows in the original input. The reason is that we construct the windowed groups from timestamps of successive events. If there was any input row that did not fully cover a matching windowed group; i.e., the input row's *valid_from* or *valid_to* timestamp fell somewhere inside the matching windowed group, then these timestamps would have resulted in a smaller windowed group. Proof by contradiction. An "interval within" join can be executed much more efficiently than an "interval overlaps" join in principle. In our SQL implementation, we have even rewritten it into a "point inside interval" join, which has a special implementation in Snowflake (even though that implementation currently is not used when another equality predicate is present). The rewrite is valid because if and only if the *valid_from* of an *r_window* row falls within the interval of a matching *r_bounded* row, then *valid_to* also falls within the interval, by virtue of the way windowed groups are constructed, as reasoned above.

Execution Plan

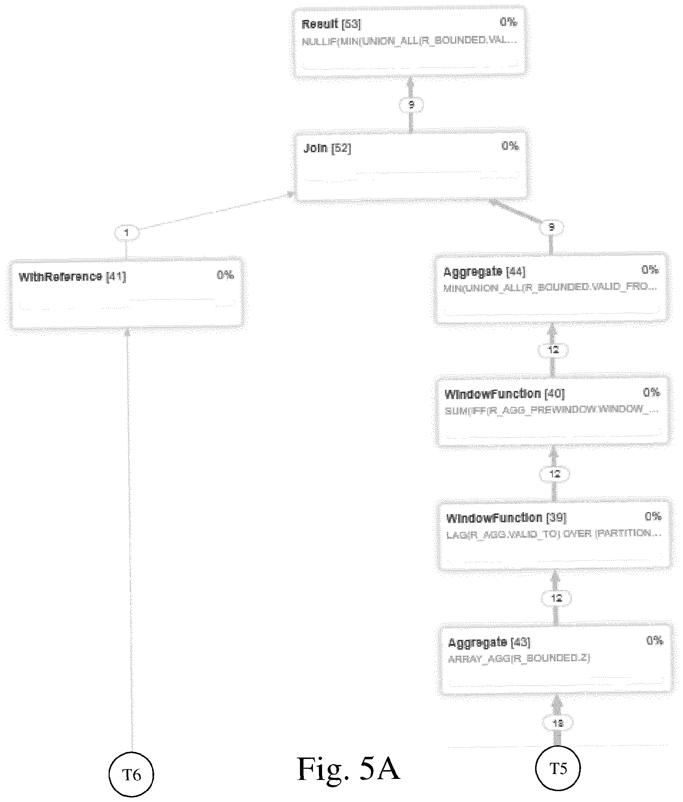

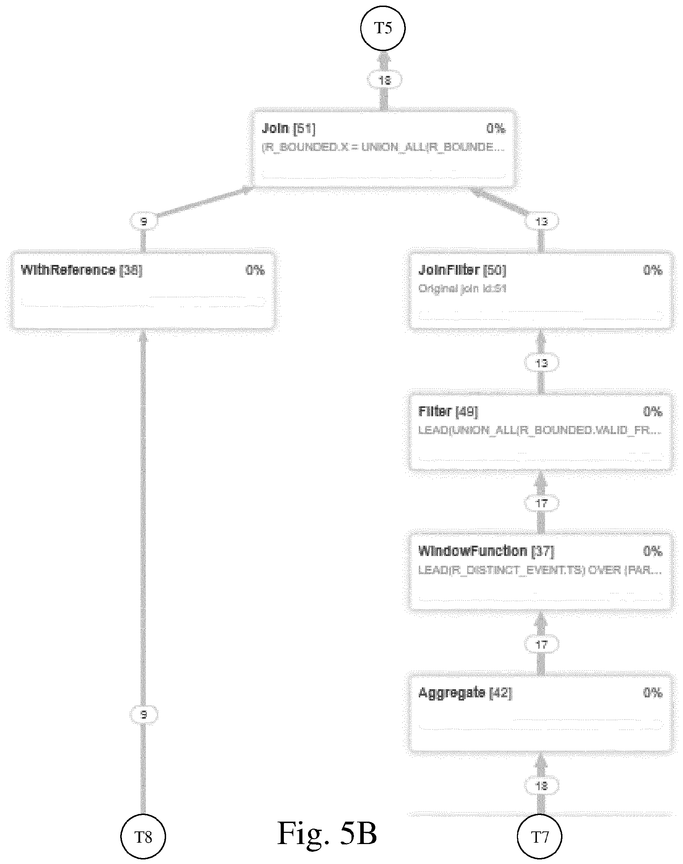

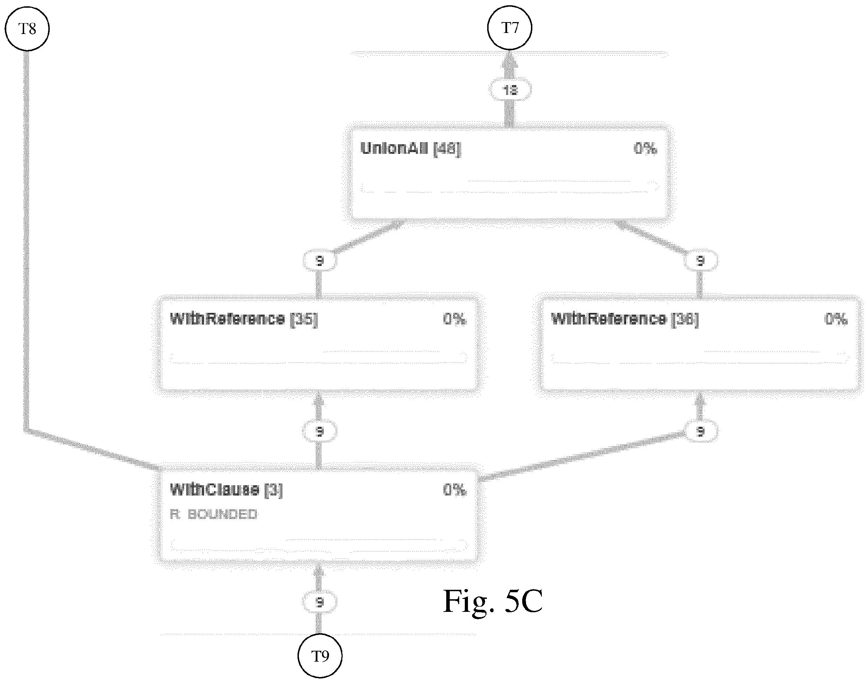

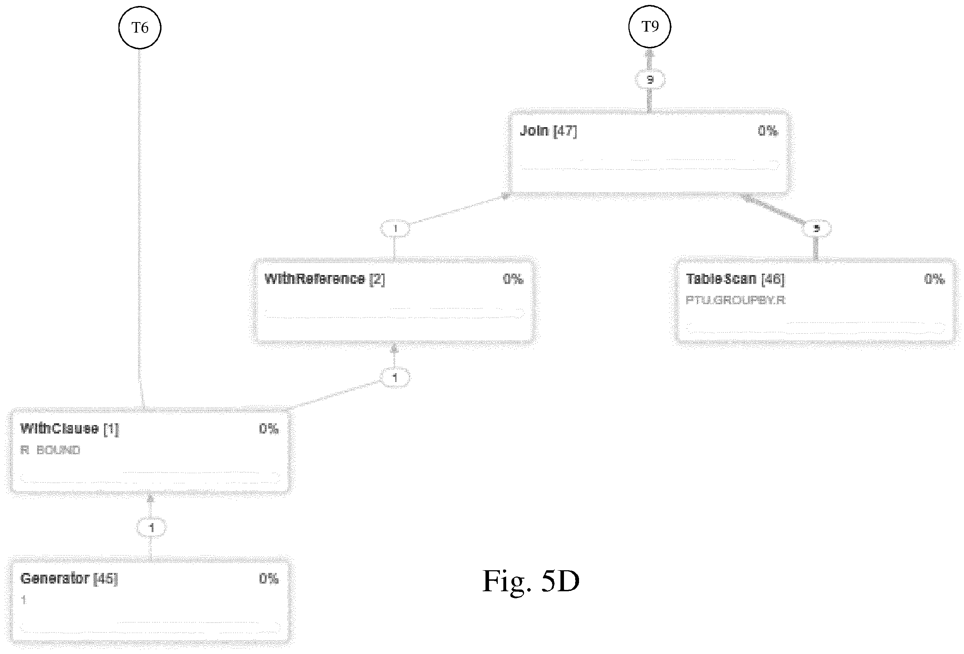

The execution plan of an example embodiment is shown in Figs. 5A through 5D. Ignoring the operators required for *neginf, posint*; the plan consists of the three *WindowFunction* PartitionOrderBy) operators, three *Aggregate* GroupBy) operators, and one *Join* operator. The first *Aggregate* operator performs the deduplication of events (*distinct*). Then, a *WindowFunction* operator computes the windows from the events using lead. Then comes the *Join* between the windows and the input table, followed by the *Aggregate* operator that computes *array_agg.* The optional Pack operation then requires two *WindowFunction* and one *Aggregate* operator. In total we are thus looking at four "heavy" operators for the Temporal GroupBy alone, and another three heavy operators for Pack. These can be expensive operations. On the upside, all these operators hash by *x, y* so this plan should parallelize and execute nicely, except the usual issues surrounding temporal joins. Packing is desirable whenever the input is known to contain many *NULL* values, because *NULL* values create windows but do not change the result of most aggregation functions. Packing merges these adjacent windows with the same aggregation result. Note that simply filtering the *NULL* values from the input can lead to wrong results. In the example above, the group *x = 2, y = 3* contains only *NULL* values for *z.* Filtering out these input rows would remove the row *x = 2, y = 3, arr_z = NULL* from the result.

Windowed Aggregation

Windowing refers to the act of slicing up a temporal table into windows of time, i.e., time intervals. With respect to regular aggregation (*group by*), windowed aggregation can be understood as adding an extra dimension of grouping: time windows. But there is a bit more to it. In contrast to regular grouping, windows can overlap. They need not be disjoint (though that's an important special case.) Also, windowed aggregate functions often involve (time-)ordering between items. For example, a user might ask for a moving average or a running sum. So windowed aggregation is not simply regular aggregation with an additional time dimension. The three most commonly used types of windows are:

- Tumbling: A fixed window size, say one hour or one day. Tumbling windows divide time into a "grid" of cells or "buckets" with uniform width.

- Sliding: Like tumbling windows, sliding windows divide time into windows of uniform width. But unlike tumbling windows, sliding windows overlap. For example, one could define a sliding window with a 1 hour window size and a 10 minute slide period. Each 1 hour window would then overlap with 5 other 1 hour windows, starting at 10, 20, 30, 40, 50 minute offsets.

- Session: Session windows are defined over time intervals derived from the input data. For example, a user might be interested in the number of garbage collector runs in the webserver during each web session.

Windowed aggregation can be conceptually described as a four-step process (though an implementation may choose a different approach):

1. Window Assignment: For each input row, assign (copy) it to every window it falls into. In the case of tumbling windows, it would be just one window; in the case of sliding or session windows, it may be multiple windows.
2. Group: For each window, group its data by the grouping key. The grouping key may be empty, in which case the group is the entire window.
3. Sort: Sort each group by time. (Technically, any ordering predicate is possible, not just time, but time is the default.) If the aggregate functions are order-agnostic (e.g., count), this step can be skipped.
4. Aggregate: Apply the aggregate function to each sorted group.

The output table contains one row per window and group within that window.

Window Assignment

Window assignment is conceptually a temporal inner join between the input table and the window table. Each input row is assigned to every window that it overlaps with. This definition is particularly natural and useful when dealing with session windows. A session can be modeled as a resource. The validity interval (*valid_from, valid_to*) of each resource instance constitutes a window. Returning to the example "number of garbage collector runs in the webserver during each web session", we can model "garbage collector run" as an event (or resource if desired), and "web session" as a resource. The window assignment then is equivalent to the temporal inner join between the "garbage collector run" table and the "web session" table. How to express temporal inner joins in SQL is discussed in detail here:

Window Construction

Tumbling windows and sliding windows can be treated in the same manner, except that the windows do not come from an application dataset, but are generated on-the-fly. For instance, a tumbling window table can be generated easily using the *table(generator())* table function, or even expanded out into a *values* clause.

Example, 1 day tumbling window for the past 7 days (aligned to current time): select date_part('epoch_nanosecond', dateadd('day', -7, current_timestamp)) + 24*3600*1000000000 * (row_number() over (order by null
valid_from + 24*3600*1000000000 as valid_to
from table(generator(rowCount => 7));

A sliding window could be expressed as a *union* all of tumbling windows or something more fanciful, such as a Cartesian product of a tumbling window and a table of offsets.

Example, 1 day sliding window, 1 hour slide period, past 7 days (aligned to current time):

```
with tumbling as (

      select date_part('epoch_nanosecond', dateadd('day', -7, current_timestamp)) + 24*3600*1000000000 * (row_number() over (order by nu

            valid_from + 24*3600*1000000000 as valid_to

      from table(generator(rowCount => 7))

), offset as (

      select 3600*1000000000 * (row_number() over (order by null) - 1) as off

      from table(generator(rowCount => 24))

)

      select tumbling.valid_from + off as valid_from,

            tumbling.valid_to + off as valid_to

      from tumbling, offset;
```

Optimized Assignment of Events to Tumbling Windows

The temporal inner join is unavoidable for sliding windows and session windows, because windows may overlap, causing a single input row to appear in multiple windows. A join is the only way to duplicate an input row to a variable, unbound number of output rows. A join is overkill for assigning events to tumbling windows however. Tumbling windows do not overlap, so each event may fall into at most 1 window (it may fall into 0 windows if the set of windows is finite). A much more efficient implementation of window assignment is the *width_bucket()* function:

Here is an example SQL snippet, which computes the 1-day window of event timestamps of the past 7 days:

```
date_part('epoch_nanosecond', dateadd('day', -7, current_timestamp)) +
      (width_bucket(event_time,
            date_part('epoch_nanosecond', dateadd('day', -7, current_timestamp)),
            date_part('epoch_nanosecond', current_timestamp),
            7) - 1) * 24*3600*1000000000 as valid_from,
```

```
valid_from + 24*3600*1000000000 as valid_to,
```

Caveat: *width_bucket()* will put all *event_time* timestamps less than its second argument (*<min_value>*) or greater-or-equal its third argument (*<max_value>*) into special underflow and overflow buckets 0 and 8 here, respectively. So the data needs to be filtered to ensure all timestamps falls into *<min_value>, <max_value>* to avoid surprising results. *width_bucket()* can also be used to assign resources to tumbling windows, but it only works for bounded validity intervals; i.e., validity intervals with a known maximum size. For example, if we know that the validity interval of each resource cannot be longer than the window period, each resource can overlap with at most two windows. So we can just call the *width_bucket()* function twice and then use *union* all and *distinct* to weed out duplicates. In the general case however, each resource's validity interval may overlap with an unbounded number of windows. So in the general case of assigning resources to tumbling windows, a temporal inner join is necessary.

### Group

Grouping within windows is straight-forward. Suppose a user wants to group the input data by column k. To group within each window, we extend the grouping key by the window key. The window key is simply the *valid_from, valid_to* pair of timestamps of the window. That is, *group by k* becomes *group by valid_from, valid_to, k.*

### Sort and Aggregate

SQL does not have separate "sort" and "aggregate" steps, at least not in the imperative form of our mental model. Instead, it has different families of aggregate functions, with different, declarative syntax for specifying the input order, depending on the family of the function. There are three families of aggregate functions:

- Order-agnostic aggregate functions
- Order-sensitive aggregate functions
- Analytic functions

Note that some functions are overloaded and fall into multiple families. For example, the *sum* function has both an order-agnostic implementation, as well as an analytic implementation (moving sum). Which implementation is called depends on whether an *over* clause is specified, see Analytic Functions syntax below.

### Order-Agnostic Aggregate Functions

Order-agnostic aggregate functions are the simplest family of functions. Examples:

- *count*

- *sum*

- *avg*

Example query:

with event as (

select date_part('epoch_nanosecond', dateadd('second', -uniform(0, 7*24*3600, random(0)),

current_timestamp)) as event_time,

```
                    date_part('epoch_nanosecond', dateadd('day', -7, current_timestamp)) +
                        (width_bucket(event_time,
                                date_part('epoch_nanosecond', dateadd('day', -7, current_timestamp)),
                                date_part('epoch_nanosecond', current_timestamp),
                                7) - 1) * 24*3600*1000000000 as valid_from,
                    valid_from + 24*3600*1000000000 as valid_to,
                    uniform(0, 2, random(1)) as k,
                    uniform(0, 9, random(2)) as c,
                    uniform(0, 9, random(3)) as d
            from table(generator(rowCount=>100))
        )
                    select valid_from,
                        valid_to,
                        k,
                        count(*)
                    from event
                    group by valid_from, valid_to, k
                    order by valid_from, valid_to, k;
```

This is aggregation with the window key being part of the *group by* clause, as described previously.

Order-Sensitive Aggregate Functions

Order-sensitive aggregate functions behave much like regular aggregate functions, except that the order in which the function sees its input changes its output. To specify an order, callers may add a *within group (order by...)* clause behind the function invocation. If no *within group* is specified, the order is undefined, but the query will still work.
Examples of order-sensitive aggregate functions:

- *listagg*
- *array_agg*

Example: Suppose each row has columns c and *d. array_agg(c)* would become *array_agg(c) within group (order by d)* if the user wanted to sort the contents of *array_agg(c)* with respect to d within each group of input rows.

```
    with event as (
            select date_part('epoch_nanosecond', dateadd('second', -uniform(0, 7*24*3600, random(0)),
        current_timestamp)) as event_time,
```

```
                    date_part('epoch_nanosecond', dateadd('day', -7, current_timestamp)) +
                        (width_bucket(event_time,
                                date_part('epoch_nanosecond', dateadd('day', -7, current_timestamp)),
                                date_part('epoch_nanosecond', current_timestamp),
                                7) - 1) * 24*3600*1000000000 as valid_from,
                    valid_from + 24*3600*1000000000 as valid_to,
                    uniform(0, 2, random(1)) as k,
                    uniform(0, 9, random(2)) as c,
                    uniform(0, 9, random(3)) as d
                from table(generator(rowCount=>100))
            )
                select valid_from,
                    valid_to,
                    k,
                    array_agg(c) within group (order by d)
                from event
        group by valid_from, valid_to, k
        order by valid_from, valid_to, k;
```

Analytic Functions

Analytic functions are quite different. They do not return one output row per group. Instead, they return one output row for every input row. Conceptually, one can look at them as performing an aggregation followed by later-flattening (joining) the result of that aggregation back into the input table. (In fact, that's exactly how most of them are implemented in Snowflake.)

Examples of analytic functions:

- *lag, lead*
- *first_value, last_value*
- *row_number*
- *sum* (rolling sum)
- max (rolling maximum)

For instance, *lag(c) over (partition by k order by d)* returns the previous value of c with respect to the order established by sorting the data by d within the group that the current row belongs to according to *k*. In many cases though, we really want an aggregate value, not an aggregate value flattened back into the input table. For instance, we often want something like "*c* where d is maximum". There are two ways to express this in SQL.

1. As a join between the original input table and the aggregated input table, either explicitly using *min* or *max*, or using *any* or all
2. Using an analytic function

Which solution is faster is hard to predict. If the desired semantics can be expressed using *min* and max, solution (1) is usually faster. Snowflake is better at hashing than sorting, so a group-by and a join are very likely to be faster than an analytic function. Nonetheless, let us first look at solution (2), since that is the main topic of this section. One cannot write *first_value(c) within group (order by d) group by k,* because within group is simply not valid syntax for *first_value.* It is an analytic function, not an order-sensitive aggregate function. SQL requires one to "undo" the flattening by explicitly discarding all the redundant data using *distinct* or *any_value()* and *group by.* Example query that computes "c for minimal *d*":

```
with event as (
        select date_part('epoch_nanosecond', dateadd('second', -uniform(0, 7*24*3600, random(0)),
current_timestamp)) as event_time,
                date_part('epoch_nanosecond', dateadd('day', -7, current_timestamp)) +
                    (width_bucket(event_time,
                            date_part('epoch_nanosecond', dateadd('day', -7, current_timestamp)),
                            date_part('epoch_nanosecond', current_timestamp),
                            7) - 1) * 24*3600*1000000000 as valid_from,
            valid_from + 24*3600*1000000000 as valid_to,
            uniform(0, 2, random(1)) as k,
            uniform(0, 9, random(2)) as c,
            uniform(0, 9, random(3)) as d
        from table(generator(rowCount=>100))
    )
        select distinct valid_from,
            valid_to,
            k,
            first_value(c) over (partition by valid_from, valid_to, k order by d)
        from event
        order by valid_from, valid_to, k;
```

Alternatively:

```
with event as (
        select date_part('epoch_nanosecond', dateadd('second', -uniform(0, 7*24*3600, random(0)),
current_timestamp)) as event_time,
```

```
                  date_part('epoch_nanosecond', dateadd('day', -7, current_timestamp)) +
                       (width_bucket(event_time,
                              date_part('epoch_nanosecond', dateadd('day', -7, current_timestamp)),
                              date_part('epoch_nanosecond', current_timestamp),
                              7) - 1) * 24*3600*1000000000 as valid_from,
                  valid_from + 24*3600*1000000000 as valid_to,
                  uniform(0, 2, random(1)) as k,
                  uniform(0, 9, random(2)) as c,
                  uniform(0, 9, random(3)) as d
              from table(generator(rowCount=>100))
    ), analytic as (
          select valid_from,
                  valid_to,
                  k,
                  first_value(c) over (partition by valid_from, valid_to, k order by d) as first_value_c
          from event
    )
          select valid_from,
                  valid_to,
                  k,
                  any_value(first_value_c)
          from analytic
    group by valid_from, valid_to, k;
```

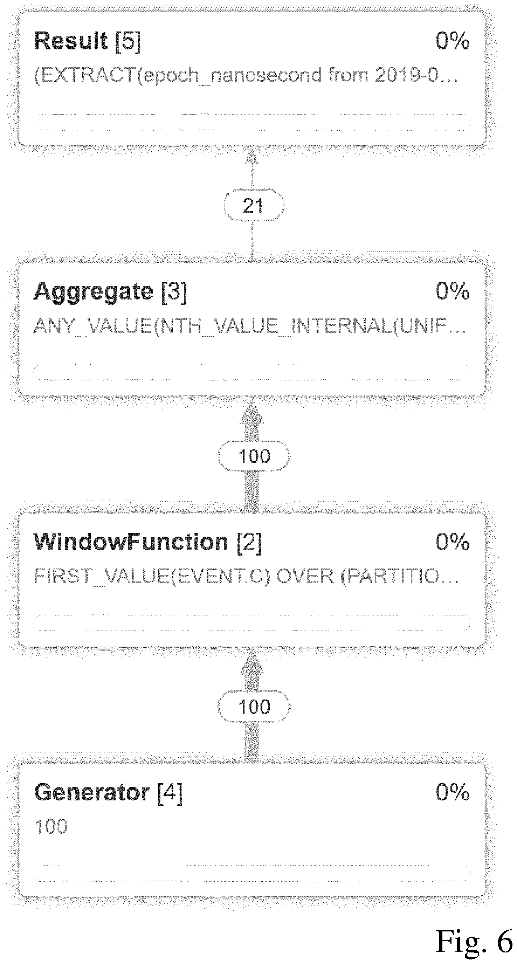

The second version is a bit more explicit in its semantics and is slightly more efficient because it does not add *first_value_c* to the grouping key. (There is a functional dependency from *valid_from, valid_to, k* to *first_value_c,* so adding it to the grouping key as done by *distinct* is redundant.) On the downside, it is a little more verbose. Both versions are fine. The query plan for both queries is shown in Fig. 6.

Alternative to Analytic Functions: ALL or MIN/MAX

Here is how to express the above query ("*c* for minimal *d*") without *first_value,* just using group-by and join operators:

```
    with event as (
          select date_part('epoch_nanosecond', dateadd('second', -uniform(0, 7*24*3600, random(0)),
    current_timestamp)) as event_time,
                  date_part('epoch_nanosecond', dateadd('day', -7, current_timestamp)) +
```

```
                (width_bucket(event_time,

                        date_part('epoch_nanosecond', dateadd('day', -7, current_timestamp)),

                        date_part('epoch_nanosecond', current_timestamp),

                        7) - 1) * 24*3600*1000000000 as valid_from,

                valid_from + 24*3600*1000000000 as valid_to,

                uniform(0, 2, random(1)) as k,

                uniform(0, 9, random(2)) as c,

                uniform(0, 9, random(3)) as d

        from table(generator(rowCount=>100))

    )

        select valid_from,

                valid_to,

                k,

                any_value(c)

        from event as w1

        where d <= all(select d

                from event as w2

                where w1.valid_from = w2.valid_from

                        and w1.valid_to = w2.valid_to

                        and w1.k = w2.k)

    group by valid_from, valid_to, k;
```

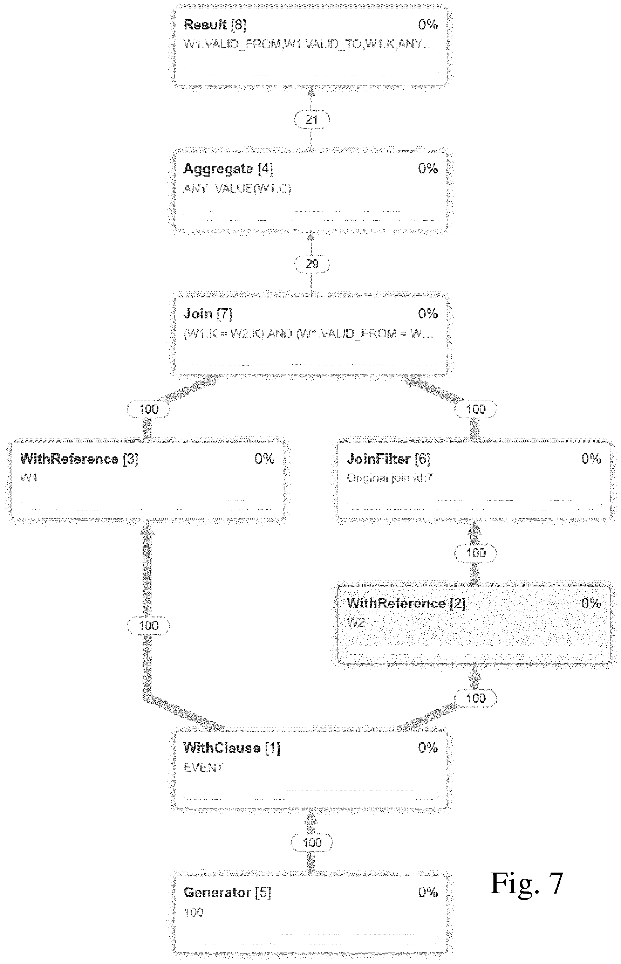

The above query uses the *all* keyword. It does exactly what its name suggests. It turns *true* if the given condition holds for "all" rows returned by the nested query. The compiler easily recognizes the *where* clause as a join predicate (the sub-query is "correlated" in compiler-speak), so it turns the sub-query into a join. Note the *any_value(c)* call and *group by valid_from, valid_to, k* in the main query block. One can omit that part, but then one will see more than one output row per group in cases where there are two rows in one group with the same value d (a tie). This duplication in case of ties may be desired or not. The query plan is shown in Fig. 7.

This plan is somewhat surprising. Snowflake does not perform a grouped aggregation to compute the minimum of d in the sub-query. Instead, it performs a more straight-forward anti-join using *W1.D > W2.D* as a secondary join predicate. That can be the optimal plan, but it is risky. If the groups are very large (worst case: one window with one group), the join becomes a Cartesian product with a secondary join predicate. Asymptotic cost: $O(m^2)$ for m rows in *windowed_event.* Finally, here is the old SQL2 way of manually performing the aggregation and self-join:

```
with event as (
    select date_part('epoch_nanosecond', dateadd('second', -uniform(0, 7*24*3600, random(0)),
current_timestamp)) as event_time,
        date_part('epoch_nanosecond', dateadd('day', -7, current_timestamp)) +
            (width_bucket(event_time,
                date_part('epoch_nanosecond', dateadd('day', -7, current_timestamp)),
                date_part('epoch_nanosecond', current_timestamp),
                7) - 1) * 24*3600*1000000000 as valid_from,
        valid_from + 24*3600*1000000000 as valid_to,
        uniform(0, 2, random(1)) as k,
        uniform(0, 9, random(2)) as c,
        uniform(0, 9, random(3)) as d
    from table(generator(rowCount=>100))
)
    select valid_from,
        valid_to,
        k,
        any_value(c)
    from event as w1
    where d = (select min(d)
            from event as w2
            where w1.valid_from = w2.valid_from
                and w1.valid_to = w2.valid_to
                and w1.k = w2.k)
group by valid_from, valid_to, k;
```

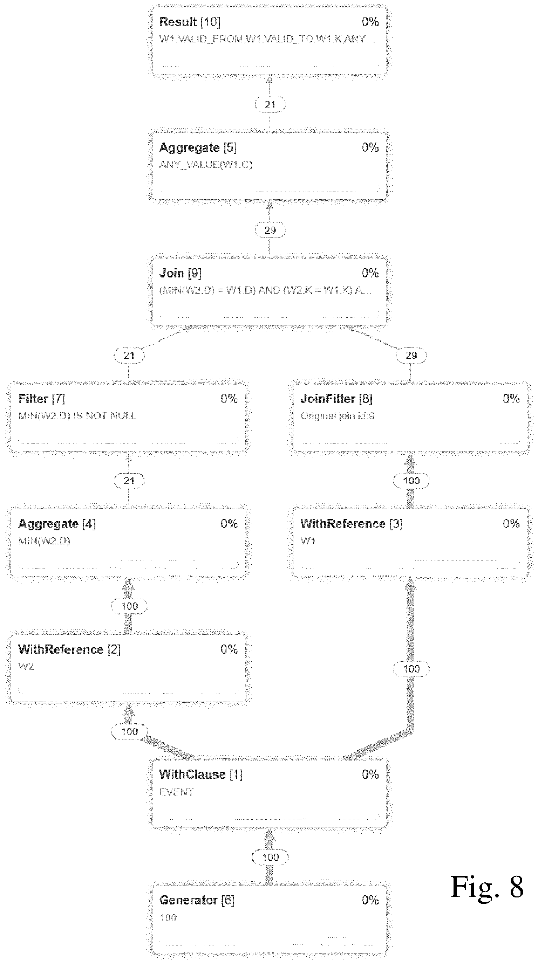

The query plan is shown in Fig. 8. This plan is slightly bigger than the plan for the *all* keyword, because it uses a group-by (*Aggregate*) and an inner join with the sub-query instead of an anti-join. But it is much more robust to large groups. The inner join is an efficient -1:1 hash-join except where multiple rows in a group have the same minimum value *d*. So this query is the superior solution unless one has reliable statistics on *windowed_event* that guarantee that the anti-join in the previous query will not run in O(m^2). If in doubt, worst-case performance trumps best-case performance when choosing a plan. Again, the *group by valid_from, valid_to, k* part at the end can be omitted if desired.

Stream Processing of Temporal Datasets

In this document, we discuss how to perform stream processing for temporal datasets such as events and resources (as defined in Data Model). Stream processing means the input dataset(s) of a transform (defined by APAL aka temporal relational operations) can be potentially unbounded. In this document, we refer to an unbounded dataset simply as a dataset. Because of the nature of our system (continuously ingesting new observations), all datasets are by definition unbounded. Window-based stream processing (Google Dataflow) defines a framework to map events to windows and perform aggregation operations over those windows. The model is pretty generic and what's been proposed below can be seen as a special case of such framework: semi-open window (because the impact of an event in our system can potentially last infinitely) and a way to "splice" the newly computed temporal data in the window with the existing data. Note about terminology: in this document the term "dataset" is used freely to indicate both the logical definition of a dataset and a possible materialization of the dataset.

Temporal updates

Stream processing mainly deals with updates to a dataset, i.e., when an input dataset is updated, the streaming processor would figure out how to update its outputs based on the transform logic. Determining how to map and propagate the input updates to output updates is critical to the efficiency of the streaming process. Traditionally, updates to a relation are often described as DML operations of rows (e.g., within this update, we have inserted rows $R1$ and $R2$, deleted row $R3$, and updated row $R4$). However, using such language to describe updates to temporal relations (e.g., resources) is awkward. For instance, a high level update of "changing the state $X$ of resource $R$ to S between time $t1$ and $t2$" would be described as "modify row $R1$ 's *valid_to* to $t1$ , modify row $R2$'s *valid_from* to $t2$, and insert a new row with $X=S$ and *valid from=t1* and *valid_to=t2*". Therefore, we need a new way to describe an update to a temporal dataset. We start with something simple called an "since time $T$" update: an update since time $T$ means all temporal relations remain the same before time $T$ and are potentially changed after time $T$. In other words, all temporal states before time $T$ are not affected by this update. For an "event" dataset, a "since time $T$" update simply means all events where $timestamp < T$ remain unchanged. A "resource" dataset is different because each row describes the state during a period of time. We can define "since time $T$' for resources as follow: if we set each row's *valid_to* to $T$ if its *valid_to* $> T$ (or is null), the resulting dataset remains unchanged. Such operation to set *valid_to* to be at most $T$ can be referred to as a temporal truncation. Note that an alternative definition of "since time $T$" for resources is to treat each row as an event and all events with *valid_from* $< T$ remain unchanged. Such definition can overestimate the impact of an update. For instance, a container that starts at time 10 is updated by another event at time 1000. Conceptually, the state of the container remains unchanged between times 10 and 1000, but based on the above definition we will have to set the update time to 10 (because the row does technically get updated with *valid_to* set to 1000). As a result, all downstream transforms that depend on this container will get recomputed (unnecessarily) for the range [10, 1000].

A nice property of the above definition of "since time $T$" update for temporal datasets is that the updating threshold $T$ is very easy to calculate and propagate for the transforms we care about most. This is because for most transforms in our current pipeline, any input state update before $T$ would only affect output state at or after $T$ (i.e., the "past" doesn't depend on the "future"). As a result, we can directly propagate the input's updating threshold to the output (or if there are multiple inputs, pick the min among their thresholds). In cases if we do want to make "past" depend on the "future" (e.g., we want to compute a sliding window aggregation but use the start time of the window as the timestamp for the aggregated result), we can subtract the time shift from the threshold $T$ when propagating it forward. A side note: there is some relationship between the updating threshold and the watermark. The watermark of a transform is essentially the bottomline of any updating threshold of its input datasets, because whatever state before the watermark is considered "sealed" and cannot be updated any more.

Stream processing of temporal updates

Based on the definition of the "since time $T$" updates, stream processing of temporal datasets becomes relatively straightforward. On a high level, our stream processor (scheduler) would detect updates for each input of a transform. When an update is detected, it would use the input dataset's contents as well as its updating threshold to update its output datasets as well as generating updating thresholds for the downstream transforms. Each "round" of such execution would involve the following steps:

- Determine the output updating threshold $T\_O$ based on the input updating thresholds (mostly just the min of all input updating thresholds).
- Truncate the output datasets beyond $T\_O$. Note that such truncation is a "temporal truncation" in the sense that it operates on the temporal state instead of the actual rows. For instance, a temporal truncation beyond time $T$ would update a row with *valid_from=t1 (t1 < T)* and *valid_to=+Inf* to *valid_from=t1* and *valid_to=T.*
- Recompute the state for the output datasets since $T\_O$. This step is basically the same as just running the APAL-compiled SQLs over the input datasets. One tricky aspect is we need to determine that read window for each input dataset based on $T\_O$. Some look back window is necessary for temporal aggregation-type of transform like "resourceify".
- Merge the newly recomputed state with the truncated state. This would be a temporal union (a regular union and a pack). Because the two parts of the union are always merged at time $T\_O$, we can apply some optimization and maybe have a special temporal "splice" operation.

It is easy to see this works for a variety of transform types: Basic event $\rightarrow$ event transform: we would truncate the output based on the earliest event in the update and recompute all events since then. This is not the most efficient processing for this type of transform, because we can easily use a unique *row_id* to track individual row changes and only process those changed. Event $\rightarrow$ lookup with resource $\rightarrow$ event transform: this is common when we want to "enrich" an event with a resource. With this, we will redo the join for all events that fall into the updated range of time. Event → "resourcify" → resource transform: without out-of-order event arrival, this becomes recomputing the new resources and union them back to the existing resources. With out-of-order arrival, we would invalidate all resources since when the out-of-order occurred and recompute forward. Resource → lookup with another resource → resource transform: this is similar to the second case above.

Backfilling and asynchronous processing

The above stream processing model assumes all transforms start at the same time so their states are always in sync. This is obviously impractical, as with our system the customer would want to add/delete transforms dynamically. Hence we need to deal with newly added transforms in a reasonable way. We can use the watermark of a transform as the backfilling threshold, because watermark effectively means "don't care any update before this point in time". Therefore we can use the backfilling threshold to bootstrap the watermark of a transform. Another question is when a transform is added how do we bootstrap the state of its outputs and make it "catch up" with its inputs. The naive way is to generate an "initializing update" per input with an updating threshold set to be the beginning of time. Then, during the first run, the transform would recompute everything from the beginning in one shot. The downside of the approach is that the initial run might take very long. Long running query is not an issue per se, but since we cannot easily checkpoint its progress, it can be vulnerable to crashes, new deployments, basically anything that might cause the scheduler to lose state of such queries. Another complication is locking. It is not reasonable to lock the upstream table while this transform is running, but at the same time we need to ensure a consistent view of the table throughout the transform (which can include multiple SQL statements). The solution is to allow a transform to process data only within a finite range of time (with both lower and upper bounds). In this way we can divide the backfilling process into multiple transform runs each processing a "chunk" of the input data and let the outputs gradually catch up with the inputs. The challenge here is to coordinate the upstream updates and the downstream transform runs in order to achieve eventual consistency. Here is one process (time range coloring) that achieves this:

- For now assume the transform has only one input dataset. The process can be easily generalized to multiple inputs, but it's easier to discuss the simplest case.
- We would keep a coloring timeline and a version number for the input dataset. A coloring timeline contains non-overlapping ranges that are either colored or not (clear). The colored range must also be associated with a particular version number.
- When the upstream updates the dataset, it would first bump up the version number for the dataset, and then color the updated range with the new version number. It would also clear any coloring beyond the updated range.
- When the transform is ready to run, we would first locate the earliest colored region beyond its watermark. We then use the start of the colored region as its start time, and either run through the entire blue region, or a portion of it. Note the region might contain different versions. We would record the region as well as the current version number of the dataset.
- When the transform finishes, it would clear the coloring of all or part of the recorded region. The rule is it would only clear the color of the portion that 1 B is still colored and 2B has the same or less version than the recorded version.

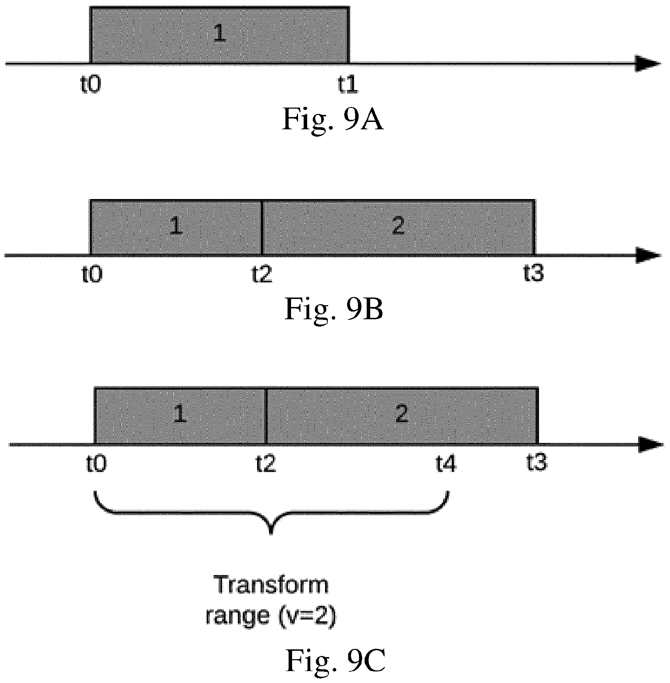

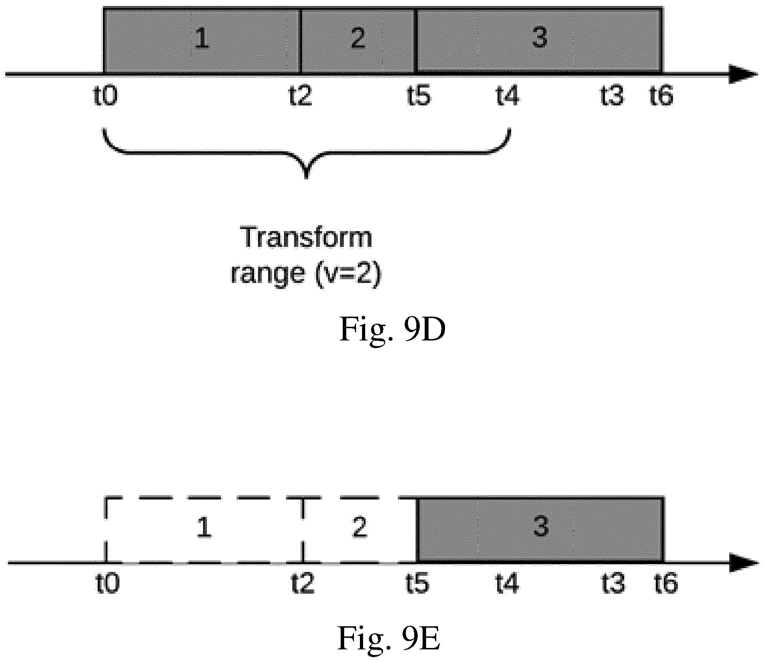

Referring now to Figs. 9A through 9E, examples show the process in action. Referring particularly to Fig. 9A, first the upstream has updated the dataset between time *t0* and *t1,* and we shall mark such time range with version *1.*
Referring now to Fig. 9B, the upstream has updated the dataset again between time *t2* and *t3*. Because of some out-of-order arrival, *t2 < t1.* We shall then mark the time range *[t2, t3)* with a newer version *2.*
Referring now to Fig. 9C, the scheduler starts a transform run. It chooses *t0* as the starting point of the time range to process because it's the earliest marked time range. It then chooses *t4 (t2 < t4 < t3)* as the ending point because processing all the way until *t3* might take too long and we decided to only process until *t4.* Before the run, the scheduler also notes down the range *[t0, t4)* and the current version (2).
Referring now to Fig. 9D, while the transform is running, the upstream updates the dataset again for the range *[t5, t6).*
Referring now to Fig. 9E, now the transform finishes. Even though the transform was running for region *[t0, t4),* the scheduler would only clear the marked region *[t0, t5),* because it hasn't seen the latest updated data (with version 3).
The process works because any newly updated range in the input dataset would contain the highest version number and the downstream transform will eventually process it.

Watermark

Watermark is a way to protect the pipeline against extremely late arrival data. Each transform (not the dataset) should track its watermark level, and any updating range from the upstream should be left-trimmed by the watermark. There is no perfect way to set and update a watermark. A reasonable heuristic is to set the watermark based on the progress the transform has made. For instance, if the transform has just finished updating the range between *t1* and *t2,* we can set the watermark to be *t2* - *delta* where *delta* is the tolerance of out-of-order arrival.

Time domain

The process above does not make any assumption about which time domain to use (processing or event). As long as the time domain is consistent through the pipeline, the stream processing process works. However, it is not unreasonable for the customer to change the time domain in the middle of a pipeline. For instance, the customer might discover a more accurate time field inside its event's JSON or text data and decide to replace the event time with that. It is unclear how the UI would deal with this, but the stream processing process can deal with this as long as each transform is in one consistent time domain. It is ok for two adjacent transforms to have different time domains. The trick is to convert the updating ranges between time domains when the updating range is propagated between two transforms. The conversion would incur additional cost (as it most likely will need to scan the table at least for the updated range), so it might be better to limit the case for time domain changes.

Optimizations

Per-resource updating thresholds.

- We can choose to propagate one updating threshold per resource key. In this way we don't need to truncate the resources that haven't been changed by the last batch of updates.
- It would incur some more overhead of metadata tracking, but might be worth it.

Discussion

What's the relationship with window-based stream processing (e.g., Dataflow)? Window-based stream processing deals with one specific type of stream processing, namely temporal aggregation. Its assumption is that an event's impact is limited inside one or more finite time windows. Our assumption is that an event's impact may not be limited inside finite windows but can potentially impact all state since the event's time. As a result, our process is more generic, but would be less efficient compared to the windowed process if dealing with temporal aggregation. It is an open question how we can further optimize the process if we assume an event's impact is finite. Backfilling backward incrementally? Sadly with this model backfilling backward is impossible. Any new data added to the front of the time range would invalidate all previously computed state. The good news is with asynchronous processing we can materialize multiple tables for the same dataset each with different backfilling goal. Non-temporal dataset updates? Non-temporal dataset is equivalent to temporal dataset with validity period *(-Inf, +Inf),* and therefore its change would trigger an update of the range *(-Inf, +Inf)*. Each transform would then recompute its output starting from its watermark, because the update range is left-trimmed to *[Watermark, +Inf).*

Implementation Decisions based on the Entity Model separation from Temporal Relational Algebra

Given that the concept of "interval time table" is weaker than the concept of " Resource table," we need to clarify what the role of the pieces of the platform of an example embodiment are in implementing both. In practice, we build the temporal relational algebra as a solid theoretical foundation on which to implement the application of an example embodiment. Because of this, the user interface, and the way users interact with an example embodiment, should primarily be optimized for the workflows sitting on top of the Entity Model. It is also the case that users may very well find themselves with intermediate results that are not on a normal form, and the UI and tools need to do something reasonable (informed by the underlying theory) in these cases. There are two possible approaches to build this. To quickly compare them, approach A is a "strict layering" model, and approach B is an "integrated layers" model.

Strict Layers

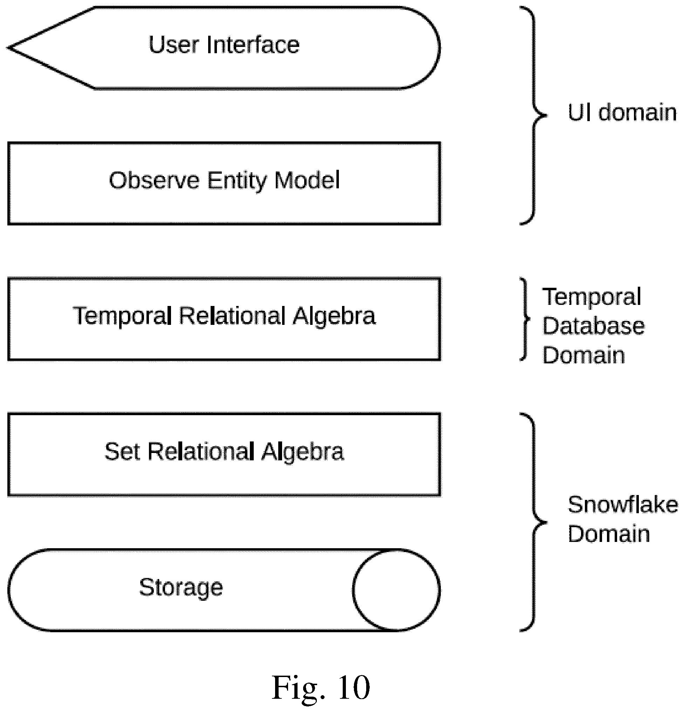

Referring now to Fig. 10, this is the approach we would take if we built an example embodiment on top of an existing temporal relational database. The Entity Model is defined in terms of the temporal algebra, and the temporal algebra in turn is implemented on top of the set relational algebra of SQL. Because users will end up with some datasets that are not in normal form, the Entity Model needs to encompass the capabilities of the underlying relational algebra.

### Integrated Layers

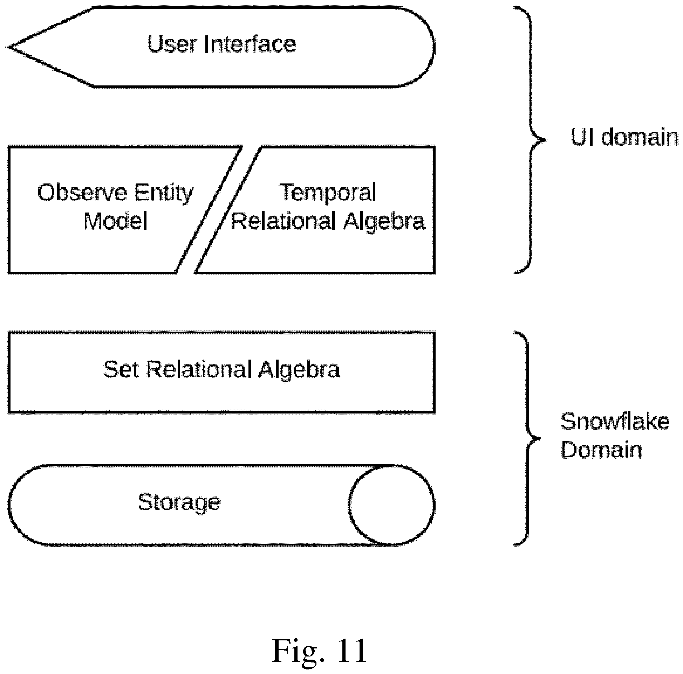

Referring now to Fig. 11, this model recognizes that the Entity Model encompasses the temporal relational algebra, and also provides additional functionality when working with datasets that conform to normal form. Thus, an example embodiment builds a single unified layer that implements the platform model which includes as a subset the temporal relational model.

### Arguments

The Strict Layers model requires a large amount of redundant computation. Because the Entity Model is defined in terms of temporal relational algebra, the "Entities" layer would have to do all the temporal algebra derivation, to ensure that it understands the form of the outputs, and then turn around and talk to the "Temporal Algebra" layer which would do all the same things again. Additionally, there are optimizations for normal forms that could be more effectively expressed if the layer of an example embodiment gets to talk all the way down to the SQL (relational) layer. A good analogy is the cases we've already run into where we know we could do better on top of Snowflake if we had access to their underlying query execution plan, rather than having to express our intent through the funnel of the SQL language. There is also a problem if we say that the temporal layer is entirely hidden by the layer of an example embodiment; the user will end up with datasets that have temporal form, but not necessarily normal form, and the UI needs to do something reasonable with those, indicating that the layer of an example embodiment would end up being a full superset of the temporal layer. To support the Entity Model, OPAL verb implementations know how they transform their upstream inputs to their downstream outputs, and transform the schema that goes along with the data transformation to match. Because the schema includes things like "defined foreign keys," the verbs need to know what their transforms mean in the greater context of the Entity Model. These arguments together indicate that an Integrated Layers approach leads to the better outcome for an example embodiment - essentially, an example embodiment UI and platform implements the Entity Model, which is a superset of the temporal relational model.

### Implementation

OPAL verb implementations will process the metadata of their datasets in addition to implementing the SQL for processing the user data of the datasets. This means that a nominally "pure temporal algebra" verb like "join," would have to know how to update the schema of an example embodiment for the joined dataset, even though it inherently is just a lower-level algebraic building block. This is a necessary compromise to make the overall platform serve its purpose, while still letting us build the basic temporal algebraic building blocks to have a solid theory foundation. This means that a necessary part of the specification of any OPAL verb, even if it's "just" a pure temporal relational algebra building block, is the specification of how it affects the Entity Model schema of the processed dataset(s). Certain OPAL verbs will work best, or only, when they are presented with normal form inputs. These verbs will generate an error if attempted to be used on an input that's not known to be in the appropriate normal form. This is a necessary compromise to make staying within the rails easy and convenient for the user interface and for "high-level" command line / API access. Given that we implement the basic operators of fundamental temporal algebra, there are other ways to accomplish what the user intended, if they really do want to stray outside the guard rails; the Entity Model specific verbs are to be thought of as convenience macros. There will need to be operations that re-derive preferred physical forms of data. Operations may include "packing," and "interval normal form aggregation," and other similar forms. Deriving these forms from fully-unformed data will generally be an expensive operation, so carrying metadata about the degree of adherence to forms from the upstream inputs may allow us to optimize implementation significantly. Additionally, carrying sufficiently rich metadata that we can choose to defer certain operations (like packing) until they are "really needed," will also allow us to optimize the generated query.

### Time Windows

Every query is executed in the context of some "time window." This "time window" determines the interesting time range of the output of the query - it's like a temporal form of *offset* and *limit* in SQL. For functions that are linear in time, the time window that a function reads from, and the time window that a function writes from, are equivalent. Thus, we can optimize many data sourcing operators by copying the output window into a filter on *select* on the input side (which looks like *with t_0 as select \* from some_table where ifnull(valid_from, left) < right and ifnull(valid_to, right) > left*). For functions that shift the notion of time - "compare to one week ago" - we need to expand the size of the window we read from to be able to get the data we need. If the window shift is a fixed amount of time, then we can dilate the window by that much (and perhaps even move the right edge, too, for that case.) For functions that shift the number of rows, this is harder, because we don't know how much time is needed to capture the necessary number of rows. A conservative estimate for resources is "the resource lifetime timeout, times the number of rows requested." Additionally, implementations of functions that shift time, need to filter out output rows that are generated based on the rows outside the interesting window. An example is shown below.

Let's assume we have this input data of "revenue per day," and the table is a resource table with one value for the *revenue* column per day:

| date | revenue |
|------|---------|
| 08-07 | 350 |
| 08-08 | 25 |
| 08-09 | 125 |
| 08-10 | 225 |
| 08-11 | 325 |
| 08-12 | 50 |
| 08-13 | 150 |
| 08-14 | 250 |
| 08-15 | 75 |
| 08-16 | 175 |
| 08-17 | 275 |
| 08-18 | 100 |
| 08-19 | 200 |
| 08-20 | 300 |

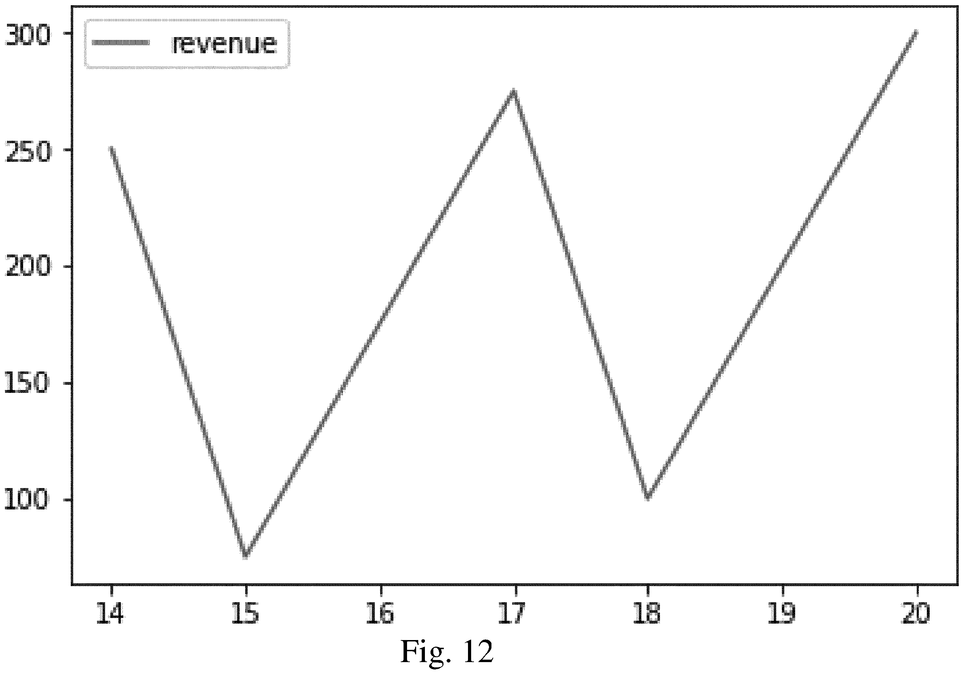

Based on this table, we could look at the revenue between 08_14 and 08_20 ("this week"). The example is shown in Fig. 12 and below.
# colpick revenue:revenue
# with a GUI timeline window of 08-14 to 08-20

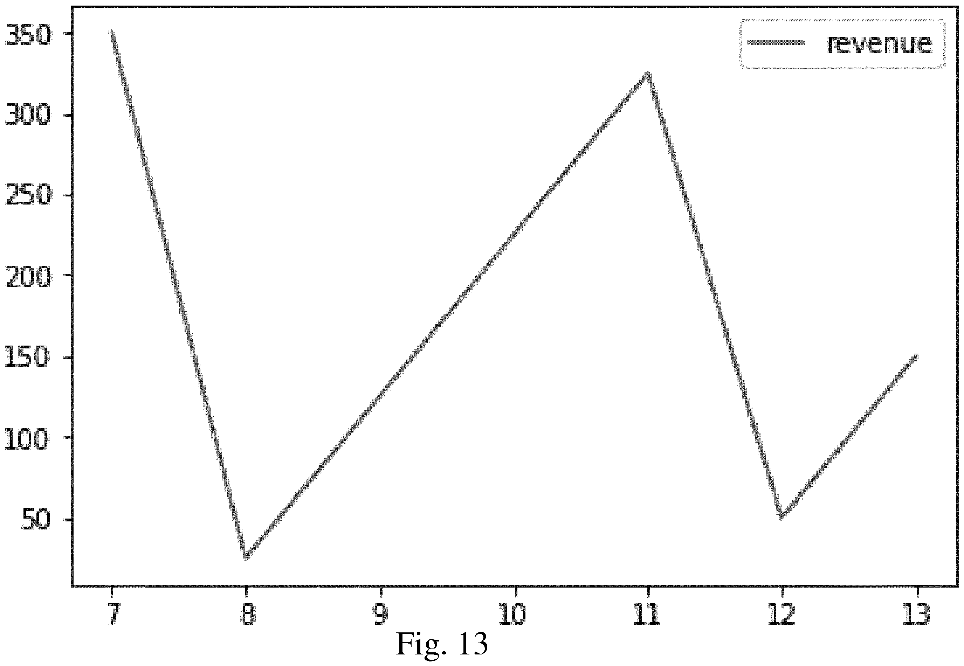

We could also look at the revenue for last week, between 08_07 and 08_13. The example is shown in Fig. 13 and below.
# colpick revenue:revenue
# with a GUI timeline window of 08-07 to 08-13

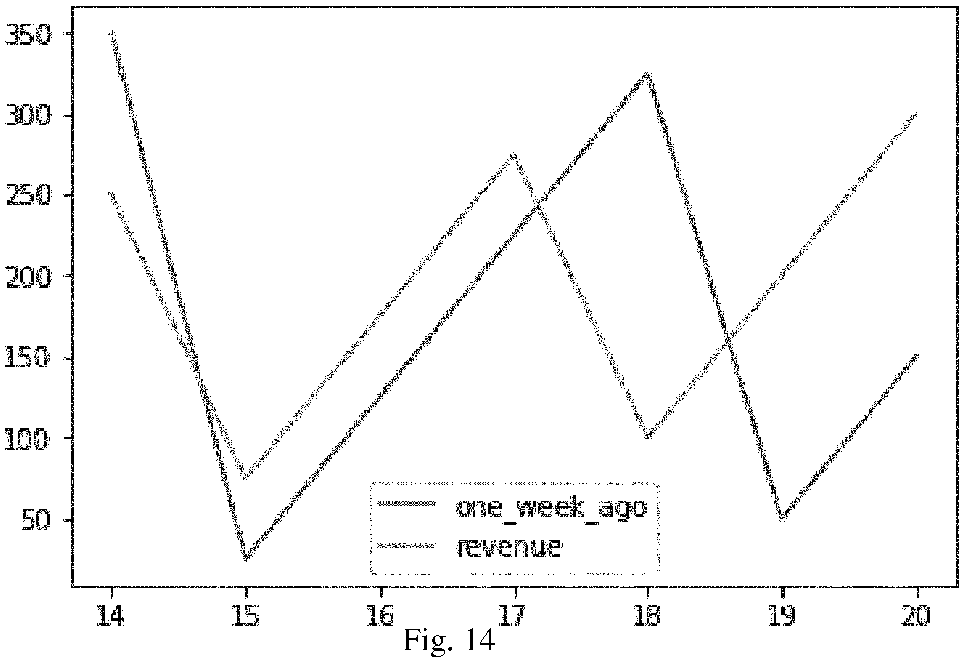

Finally, we could compare the revenue this week with the revenue last week. The example is shown in Fig. 14 and below.
# colpick revenue:revenue, one_week_ago:timeshift(revenue, duration("-1 week"))
# with a GUI timeline window of 08-14 to 08-20

Conclusion

It should be clear from this example that:

1. The time window in the GUI (which turns into QueryParams in the GraphQL) is the "time of interest" and thus determines the time stamp values at the bottom.
2. The query, to correctly output the comparison of *one_week_ago* versus *revenue*, needs to read data outside the QueryParams time window.
3. The time stamp on the data points for the *one_week_ago* series is those of the current week - the sample points indicate "at this date (such as the 20th) the value one week ago was 150." This is subtly different from the previous graph, where we see "on the 13th, the value was 150."

Row based offsets

For certain values, a "row based offset" may be more meaningful than a "time based offset." One example is converting a cumulative counter to a rate - for each new data point, subtract the value of the previous data point, and divide by time since previous data point. The problem with this is that we don't know how far back we must look to find the "previous value," which matters both for interactive queries with a specific time range, and for transform processing which is necessarily incremental. Unless we're willing to potentially look back to the beginning of time, there are three possible ways to deal with this problem:

1. For each event, output the time of the previous event with the same key. This lets us first select the earliest "previous-event time" out of the processed event set, and then run a second select with all the needed data included. This has the problem that we need to store the "previous time by key" somewhere so we can output it in further events, and the problem that we have to run two passes over the data.

2. For each query, filter by input window, and accept that the first output event will have "null" for the rate, because we don't have a previous row. For an interactive query covering a day or a week, this may be OK. For a transform query, this is more problematic.

3. For each query, let the user specify how far back they want to look. This could be inside the *lag()* operator - *lag("1 day", 1, the_value)* - or it can be an inherent property of the data set being queried, such as a defined "timeout lifetime" for resource types. This lets the user establish coherent rules for when a rate is expected to "reset" versus when we should deliver the correct value. The draw-back is that a look-back of "1 day" might be very long compared to the incremental ETL processing window of 10-20 seconds, so at a minimum, some guidance as to magnitude of look-back is needed.

Metrics Data - Motivation

An example embodiment does not draw hard boundaries around different shapes of data. Events, resources, metrics, traces, whatnot all boil down to point tables and interval tables, and can be combined freely using OPAL and temporal-relational algebra. Nonetheless, it is helpful for the user experience and performance hacks optimizations to identify different classes of data and their use cases, which translate to access patterns on the platform level. In existing systems and literature, a metrics datum traditionally consists of:

- Timestamp
- Name: string
- Value: number or structure, e.g., t-digest
- Type or Kind: counter, gauge, histogram
- Tags: dictionary of key-value pairs, values typically stringified

As we can see, such data is just a special case of Events. Traditional metrics data can easily be stored in Event datasets, as demonstrated by the *PROMETHEUS_EVENT* dataset. The existing OPAL syntax and data model already support arbitrary filtering, grouping, aggregation of event datasets. There is nothing about metrics data that requires changes or extensions to our platform. Thus, we do not need to force event data into a more restrictive format, let alone force users to pre-model their data in such a format. That is all great for our product story. Still, metrics data is typically high in volume, and users have freshness and latency expectations that may require optimized storage and processing.

Metrics vs. Resources

With respect to resources, we can identify two classes of metrics data:

1. Metrics about single resources: memory usage of a machine, CPU usage of a machine, network bytes sent by a network interface, etc.

2. Metrics about sets of resources: number of nodes in a cluster, number of concurrent transactions, average memory usage in a deployment etc.

The second class of data is obviously an aggregate of the first class of data. That said, the first class of data is often only available in aggregate form as well due to sampling and interpolation artefacts at the sensors (what's "current" CPU usage anyway). Computing and transforming the second class of data is a matter of providing an expressive query language and slick UI. We are on a path where users will be able to declare transforms for the computations they most care about, and the combination of UI, OPAL, and Snowflake's analytic capabilities should provide at least a state-of-the-art experience. The first class of data is where we have an opportunity to innovate over the state-of-the-art. One observation we have made early on is that such data can be viewed as high-velocity state of a resource. Metrics become ordinary fields. For example, the *NODE* resource has a *MEMORY_USAGE* field. Metrics fields can then be queried over just like any other field. For presentation, they are rolled up into embedded time series in resource landing pages. In the future, they may be broken out into more appealing widgets, but the underlying integrated data model is very useful and should be retained. It drives the integration of logs, metrics, tracing (monitoring) and resources (business entity) data that is at the heart of the vision of an example embodiment. (While powerful and convenient, this approach has created a number of performance challenges) There is some low-hanging fruit left, but many optimizations hinge on a physical separation of resource tables and metrics tables. Rather than treating metrics fields as ordinary fields in our Snowflake data model, metrics fields must be kept in separate tables and joined with their related resource tables on demand.

Dealing with Many Metrics

In practice, a single resource may have a large number of metrics associated with it. For example, a Node resource in some distributed application may have everything from infrastructure-level metrics such as *memory_usage* to applicationlevel metrics such as *transaction_count* and *commit_retry_count.* It is impractical and unrealistic to query and visualize all these metrics every time a resource is being looked at. For that reason alone, there needs to be a physical separation of resource data and metrics data, at least as an option. We have not hit the "many metrics" issue in our existing datasets yet, but it's clearly present in the way metrics products are used today. So any metrics solution should account for it.

Metrics Normalization and Storage

Normalization here refers to the act of partitioning and transforming metrics data in a systematic manner for purposes of artifact-free and efficient joins with related data (resources). Metrics data typically originates from "laundry basket" datasets such as *PROMETHEUS_EVENT* or *ZIPKIN_SPAN.* Individual rows of these datasets may contain many different metrics, each of which may relate to multiple resources, identified through foreign keys nested inside variant fields AJSONB. We assume a "resourcify" UI flow where users discover these metrics inside the laundry basket datasets, and then add them to an existing resource (or create a resource first, if necessary). The question then becomes how we materialize the metrics field of the resource. Several options come to mind.

1. Treat metrics fields like any other state field. That is, create a state column in the resource table and create a resource row for every related metrics event as part of some transform.
2. Materialize nothing. Simply query the laundry basket event table whenever necessary.
3. Materialize one metric table for each metric field of each resource (maximum normalization).
4. Materialize one metric table for each resource, share table among metric fields of the resource.

1. Treat metrics fields like any other state field

Solution (1) is where we are today. It works okay for low- to medium-velocity metrics, but really blows up the resource tables for high-velocity metrics, resulting in high storage overheads and execution overheads. The storage overhead comes from repeating the rest of the resource fields (which change at a much lower rate, if at all). The execution overhead comes from having to plow through and pack this redundant data at runtime. In particular, this approach will fall apart in the "many metrics" case, because of the sheer number of atomic states created by the product of individual metrics. We really want resource tables to be small, so they are quick to fetch, join, and pack.

2. Materialize nothing

Solution (2) is available today, albeit in very manual form. One can already join resources with related events and then aggregate and visualize these events as desired. What is remaining to be done is to remember these joins in the resource definition and to perform them automatically and transparently when desired. There are two issues with Solution (2):

- Read Amplification. The laundry basket table typically contains a lot of unrelated data. *PROMETHEUS_EVENT* is an extreme example. The diversity of the laundry basket rows makes them also hard to compress, compounding the read amplification problem.

- Query Complexity. Not only do we perform a resource-to-event join (that much is unavoidable for normalized data), but the metrics extraction itself may be a somewhat complex query, driving up the compile time and execution time every time the metrics field is to be computed.

### 3. Materialize one metric table per metric field

At the other extreme of the solution spectrum, we may create a separate Snowflake table for each metric field of a resource. The resulting metrics tables are highly normalized. Each row contains:

- Timestamp

- Foreign key into the related resource

- Value (double or number)

- Additional fields (often called "tags") taken from the original event

Let us compare the compressibility of such a metric table to the original "laundry basket" event table. Constant fields (such as the metrics name) compress down to nothing or can be dropped altogether. Timestamps should compress better and show better correlation (clustering), because data points of the same metric tend are likely more correlated in arrival time than data points of different metrics. Foreign keys all refer to the same resource table, so one can use plain SQL types instead of JSON. So foreign keys become more compressible and easier to prune and join over. Values compress better, because values of the same metric tend to fall into the same domain and range. Tags behave similarly. So overall, such a metric table should compress much better and be more efficient to execute over than the original laundry basket table. Note that Solution (3) can be emulated through Solution (2), by manually declaring a transform of the laundry basket dataset into the desired metrics dataset. So, in a sense, this whole discussion is about what to do automatically and under the hood when a user wants to add a metrics field to a resource.

### 4. Materialize one metric table per resource

Finally, one can choose a middle ground between solutions (2) and (3). A metrics table may contain multiple metrics fields (effectively a union of Solution (2) tables). As a result, there would be fewer tables to manage at the cost of read amplification (queries do not always need all metrics fields) and compressibility. Read amplification and compressibility aside, Snowflake is not very good at sharing scans. That is, when an input table is used multiple times in a single query, it will generally scan that table multiple times-once per metric that is being queried. Even when Snowflake decides to only perform a single scan, the multiple outputs of the scan will need to be split and buffered at some point in the plan, which adds memory and CPU overhead. So, in terms of execution cost, it is always preferred to keep each metric in its own table, so each scan will read exactly the data it needs. Solution (3) is definitely superior in execution cost. Solution (4) may have advantages in terms of compilation cost, because less metadata is needed by the Snowflake compiler. But given the volume concerns about metrics data, optimizing for execution cost is the more prudent choice. Solution (3) should be superior to Solution (4) in most cases. All that said, Solution (4) may be a viable optimization in the "many metrics" case, where there is a "long tail" of infrequently used metrics. Rather than creating and maintaining a separate table for each of those metrics, we may save transform overhead by consolidating those metrics into a single table. Note that, as with Solution (3), Solution (4) can be emulated through Solution (2).

### Joining Metrics with Resources

Moving metrics fields out of the main resource table and into separate metrics tables creates the need to join these tables at query time. The join predicate consists of:

- equality predicate on the resource key

- point-in-range predicate between metric timestamp and resource validity interval

Unfortunately, neither predicate by itself is guaranteed to be highly selective in all cases. If the resource has frequent state changes, there may be many rows in the resource table for any single resource key. Conversely, if the resource is long lived and does not have state changes, then many (all) metric rows may match the same resource row. For robust join performance, it is essential that Snowflake performs a band-join with a primary (not secondary) equality predicate. The Snowflake compiler currently does not do that (it ignores the point-in-range predicate if there is an equality predicate). We currently do not have resources with many state changes (besides metrics), so we may choose to ignore the problem for now and wait for improvements on Snowflake's side.

### Avoiding the Join

In many cases, we can avoid the problem described above by performing a much simpler join, or no join at all really. Take a resource landing page. The metrics fields are displayed alongside regular fields, but users have no interest in which specific resource state a metrics data point belongs to. To display metrics alongside a specific resource instance, it is sufficient to join the metrics table on the resource key (and filter the join input down to the query time range). In fact, it is sufficient to read and aggregate only the metric rows of the resource instances that are on the screen. If the set of resource keys on the screen is passed as a constant into the metrics query, no actual join is necessary at all. The join becomes an IN predicate, which internally uses a hash table similar to a regular join, but much simpler to compile and execute. Only when a user wants to treat metrics as a regular field, or wants to group and aggregate metrics data by regular fields that are found in the resource table does the platform need to perform a proper temporal join.

### Metrics on Multiple Resources

The relationship between metrics and resources is not always so clear. For example, a *transaction_count* metric may be related to an application *Node,* a physical *Host,* a *Customer,* or any other segment of the infrastructure or application. This is related to the "cardinality problem", where an event or metric point may have many tags and dimensions associated with it. There is no clear distinction between a tag and a resource, and tags and resources may form arbitrary ontologies. What it boils down to is that a metric may be related to more than one resource. That raises the question of how such metrics shall be stored. Materializing one table per related resource may result in high redundancy. A better solution would be to have a single metrics table with multiple foreign keys into the various related resources. Such a table looks curiously similar to a regular event table however. The only difference to a regular event table is that a metric table has a designated value column. So it all comes down to modeling. What is the user interaction for elevating an event to a metric? Who decides whether to materialize a metric table? Do metrics form first-class datasets? If not, how can a single metric be associated with multiple resources?

### Dataset Statistics - Small Materialized Aggregates

### Motivation

Any kind of cost-based optimizer relies on statistics over the data. Statistics are the basis of predicate selectivity estimation, join cardinality estimation, and many other important cost factors. We need cost-based optimization both for queries (to choose an efficient SQL plan), and for transforms (to choose the right execution frequency among other things).

### Summary

An example embodiment can follow the example of Snowflake and implement small materialized aggregates (SMAs). The equivalent marketing term pioneered by Netezza is Zone Maps. The idea is as follows. Bucketize the base data and compute aggregates such as *min* and *max* for each bucket. When facing a user query, consult the materialized aggregates instead of the base data. For better scalability, the aggregates can further be rolled up over time, analogous to how time-series databases roll up metrics data over time. SMAs are ideal for an example embodiment, because Snowflake already provides all the functionality required to efficiently compute them: static pruning, very fast *group by,* all the relevant aggregate functions, *merge into* for incremental computation.

### Bucket Size

An important design choice for small materialized aggregates is the bucket size. It should be small enough to give accurate statistics for most queries, but big enough to offer a substantial performance benefit over accessing the base data directly In Snowflake, SMAs are computed on a per-partition i.e. S3 file basis, each of which has a target size of 16 MB. There is no direct access to Snowflake's SMAs, so we have no other choice than to formulate regular SQL queries against Snowflake. But we are not interested in per-partition SMAs anyways. All queries carry a time range predicate. So we are really interested in SMAs over time ranges. The question is thus, what is the appropriate time interval to form buckets. Intuitively, it should be as small as the smallest query we care to optimize for. That suggests a bucket size of 5 minutes perhaps. That is really small for a system that seeks to put no retention limit on data, so there would need to be some form of multi-level roll up scheme. We will get there eventually, but let's start with a single-level scheme with a bucket size of one hour. One hour is small enough to cover landing pages and most queries, while being large enough to not have us worry about storage costs and maintenance overheads for a while.

Use Cases

To choose the right set of aggregates to materialize, one must consider the foreseeable use cases:

- Events and resources cover page

- Predicate selectivity estimation

- Join cardinality estimation

- Grouping key cardinality estimation

- Transform cardinality estimation

- Progressive execution

In addition to cardinalities, it is also useful to know the average row size. Depending on the operation in question, either cardinality or data volume (cardinality * average row size) may be the dominant cost factor. The average row size of a whole table can be read directly in Snowflake's table stats. The average row size of bucketed (time-partitioned) or projected data however requires actual *sum(length())* or *avg(length())* aggregation of base data.

Events and Resources Cover Page

The cover page shows, for each event or resource, a histogram of the number of events *(count(*))* or a histogram of the number of distinct resource keys (*HLL*), respectively. Additionally, there are sparklines that show the number of distinct foreign keys (*HLL* again). By creating per-hour SMAs of these, we can avoid querying the base data. The cover page could be loaded entirely from SMAs, which may even be cached outside of Snowflake. In the future, we may add additional statistics such as approximate top-k for select fields.

Predicate Selectivity Estimation

Predicate selectivity estimation is an old hat in query optimization. By far the most common predicates are = and *IS (NOT) NULL* followed by range predicates (>, <). Selectivity of equality and *NULL* predicates is straight-forward given the following SMAs:

- *min* and *max* values

- number of *NULL* values

- (approximate) number of distinct values: *HLL*

Range predicates are trickier. Many schemes have been proposed in the literature. Realistically, we cannot afford to do anything other than simple heuristics and crude formulas based on *min* and *max* in the near future. Note that most queries have multiple selection predicates, and predicates may be correlated. Query optimizers typically assume that predicates are independent, so the estimated selectivity of a conjunctive predicate is simply the product of the individual selectivities of its child predicates. Obviously, that estimate may be grossly inaccurate in reality. That said, there is nothing short of multi-attribute statistics one can do here. There are too many possible combinations of attributes to exhaustively materialize them all, with one notable exception: keys.

Join Cardinality Estimation

Join cardinality estimates are the basis of join reordering. Join cardinality estimation is thus arguably the most important part of query cost estimation. Unfortunately, it is very hard to get accurate cardinality estimates, because the output cardinality of a join is heavily dependent on the correlation of join keys. The output cardinality of a join of m and n rows may be anything between 0 and m*n. The overall cost estimation error thus increases exponentially with the number of joins in a query. Older database systems made no serious attempt at estimating the correlation of join keys. Instead, systems would use simple heuristics based on input table size and knowledge of foreign key relationships. For example, join small tables first, expect all foreign key joins to be 1:1 join. The more advanced systems use histograms and sampling. We can do all these things as well. But Snowflake also comes with a convenient *minhash* implementation that can be used for set similarity. By combining the Jaccard index of two join key sets with estimates of the cardinality of these sets (using *HLL*), one can compute an estimate of the output cardinality of an equi-join. Alas most of the joins are temporal joins. Simply looking at the statistics of join key columns without taking time intervals into account can be very misleading. A brief search for scholarly articles on cardinality estimation of band joins or temporal joins yielded 0 hits beyond black-box approaches based on running joins over sampled data. We need to do some hard thinking and experimentation to see what approaches work best for our use cases. Until then, we should rely on basic heuristics based on count and *HLL.* We already collect *minhash* of keys for other purposes (foreign key constraint recommendations), so we might as well play with that. Things like histograms based on t-digest are interesting future directions.

Grouping Key Cardinality Estimation

Grouping key (group-by) cardinality estimation is important where group-by operators appear in the middle of a pipeline, or the compiler is able to push a group-by up or down the pipeline. Group-by optimization is a very advanced topic in query optimization. The grouping key cardinality estimation by itself is a straight-forward special case of distinct cardinality estimation; i.e., *HLL.* For temporal group-by, however, one would also need to take time intervals into account. No literature on the topic is known. Given that group-by optimization is an advanced topic that we will not tackle it in our optimizer any time soon, there is no need to invest in special statistics for it at this point in time.

Transform Cardinality Estimation

The question here is "how big is the next batch of data going to be?". That question is easy to answer using *count(\*)* and time predicates, or Snowflake time travel and table stats.

Progressive Execution

For progressive execution, we want to break the input time range into smaller subranges, so that each subrange (especially the first) executes very quickly (say, _2 seconds) while still having a good chance of producing some output rows (otherwise the slicing effort was wasted). The first requires an estimate of the input cardinality, since we should never pick a larger slice than can be scanned within the target latency. The second requires an estimate of the output cardinality, which relies on all the other things discussed here. Input cardinality can be derived using *count(\*)*. Output cardinality is hard to predict in the general case, but can be predicted relatively well for simple search queries over event data (where progressive execution matters most). We can also get a decent estimate of the output cardinality using simple predicate selectivity estimation based on *min, max,* and non- *NULL* cardinality (*count*).

List of Aggregates to Materialize

Given the use cases discussed above, the following SMAs should be computed, per bucket.

- *count(\*)*

For each column:

- *count* (number of non- *NULL* values)

- *min*

- *max*

- *HLL* (number of distinct values)

- *sum(length())*

For each key (including compound keys):

- *HLL*

- *minhash*

For each foreign key (including compound foreign keys):

- *HLL*

- *minhash*

SMA Storage

The primary copy of SMAs should be Snowflake, because that is where the data is computed and where we have unbounded storage capacity. A low-latency key-value store such as FDB would offer lower latency, but even then there remains a need to cache SMAs in memory. So much is clear from what has been learned from building the Snowflake query compiler: we cannot afford to naively query into a remote storage service for every SMA access.

SMA Storage in Snowflake

The basic principle in storage design is "data that is accessed together should be stored together". There is no benefit in lumping SMAs of multiple base tables together, unless these base tables are always used together. Even then, the benefits are small because Snowflake is a column store. So let's not share SMA tables between base tables. A notable exception is minhash data for use by foreign key relationship recommendation. For this use case, one needs to compute the subset score with respect to all compatible primary keys in the database. That use case may warrant a more specialized storage scheme. That still leaves the question whether there should be one SMA table per base table, or multiple SMA tables per base table, perhaps one per base table column, key, or foreign key. Both solutions are reasonable, but one SMA table per base table is the better one. First, one can compute all SMAs in a single pass over the base data (using a single *GROUP BY* with multiple aggregate functions). It is easier and cheaper to just write out all the SMAs using a single *MERGE INTO* statement than having to deal with multi-table inserts, temporary tables, and/or multiple *MERGE INTO* statements. Second, Snowflake is a column store, so reading a small number of columns from a wide table is hardly slower than reading a small number of columns from a narrow table. The other question is how to represent the various SMA columns. The two basic options are:

- use plain SQL columns, one per SMA (of which there may be multiple per base table column)

- use a single *object* column for all SMAs

Both solutions should compress equally well and should be equally cheap to query thanks to Snowflake's ability to columnarize *object* columns. Still, the first solution is better, because it is easier and cheaper to update. There is no need to *flatten* and *objectagg.* If we add or remove SMAs at a later point, we can use *ALTER TABLE* statements to add or remove the corresponding columns. There is no need to recompute the other SMAs. Consider the following concrete example. A table T of columns a, b, c, with primary key (a, b). The SMA table would have the following columns:

- bucket_id (hours since Epoch, truncated)

- count (*count(*)*)

- a_count

- a_min

- a_max

- a_hll

- a_size (*sum(length())*)

- b_count

- b_min

- b_max

- b_hll

- b_size

- a_b_hll

- a_b_minhash

## SMA Caching

Turning the SMA tables into Go structs and building an LRU cache for them may be a solution. There is an open question though on how fresh or consistent that cache needs to be. Transforms execute non-stop, so cached SMAs may quickly become inaccurate. In particular, a cached, incomplete SMA of the latest hour of data may be very misleading. We need to do some thinking about if and how it makes sense to cache the latest SMAs at all. For example, one may choose to never consider and thus cache the latest hour SMA at all, but instead use the SMA of the previous hour. Together with some time-based or transformer-initiated expiration and the assumption that data does not arrive extremely late and is reasonably well-behaved statistically speaking, the cached SMAs may be accurate enough for our purposes. On a cache miss, the SMA needs to be fetched from Snowflake. That is a simple filter query for a single bucket ID or contiguous range of bucket IDs that Snowflake will have no problem to prune on. Given that it may still take a few hundred milliseconds to execute, a second level of external caching, say FDB or memcached, should be a worthwhile optimization in the future.

## SMA Computation

SMA Transforms

Datasets i.e., base tables change over time in response to new observations and transform execution. The SMA tables need to be kept up-to-date with respect to their corresponding base tables. SMA computation of append-only point tables is a very simple streaming aggregation. Each bucket covers one hour of time and contains several aggregates, each of which needs to be updated whenever new data arrives for the respective bucket. Each new data point is assigned to a bucket using simple integer division of the timestamp. The SMAs to be computed are all summarizable, there is no need to read any event twice. SMA computation of interval tables and non-append-only point tables is more complicated and expensive. Data in such base tables may be updated or deleted, so SMAs of the corresponding buckets need to be re-computed from scratch. To determine which buckets to recompute, the transform watermarks can serve as a conservative estimate. Alternatively, Snowflake streams can be used to get a precise delta of the base table relative to the previous SMA transform. To avoid updating SMA buckets that did not actually change (theoretically possible), one could compute a hash fingerprint over all SMAs and only update the row if the fingerprint does not match. Mapping interval rows to buckets constitutes an *unpack* or *re-window* operation. Rows that cross bucket i.e. hour boundaries need to be unpacked or re-windowed into these buckets. The implementation of unpack is a temporal join between the base table row intervals and the bucket intervals.

## SMA Freshness

The SMA transform cannot be expressed as a multi-table insert because it requires aggregation and merge. The SMAs need to be computed in a separate transform. That raises the question when to execute that transform. The straight-forward approach is to re-compute the SMAs whenever the base table changes. But that is very expensive for base tables that change frequently, especially for interval tables where SMA computation requires a temporal join. The SMA transform may easily be more expensive than the base table transform. So instead, SMAs should be computed at a lower frequency, say once per 15 minutes or even once per hour. Freshness is not a big concern, because the latest bucket i.e. hour of data is hard to make use of anyways, see discussion under SMA Caching.

## SMA Combination and Interpolation

With the notable exception of event and resource cover pages, query time intervals usually do not align neatly with 1-hour boundaries. For a query that reads multiple hours of data, the corresponding SMAs must therefore be merged. In the case of *count, min, max, sum,* the merge is trivial. In the case of *HLL* and *minhash* however, we must write Go implementations of the corresponding _combine and _estimate functions to avoid a round-trip to Snowflake. Fortunately, Snowflake allows one to export the *HLL* and *minhash* state as JSON and the underlying processs have been published.

So it is absolutely possible to write _combine and _estimate functions in Go, and compute *HLL* and *minhash* based on the cached JSON state. For sub-hour ranges (say, 15 minutes), we may choose to interpolate *count* and sum appropriately (say, divide by 4B. The other aggregates cannot be interpolated without shaky assumptions on the temporal distribution of the data.

The linkify presentation, the link datatype, and dealing with foreign keys

In a particular embodiment, we can generate less expensive column values as follows:

- for each foreign key, generate a synthetic column that is of type "link" and where the column datatype describes: target dataset id, target dataset label, source columns list, target column list.
- the payload of this column is the value of the target dataset label column for the lookup using the foreign key, as a simple string.
- to actually get to the target, look for the typedef of the column, to find which dataset to go to, and which columns to use (very similar to how to follow a foreign key).

Previous Discussion

In the GUI, we want to present a list of resource instances in a useful way. There are two functions needed for this in the APAL query language. The first is array aggregation across time for resource properties, which is dealt with elsewhere. The second is resolving foreign keys as "links" to other resources in a way that can reasonably present to them to the user. The desired presentation is that, for each resource instance that has foreign keys to other resources/events, present a clickable-link with a user-readable-name as a decoration on top of the base foreign key value. After all, the name *Shopping Cart Service* would make more sense to the user than the GUID *cd3198a1-1e22-498b-aa7d-e22d5bdd3abc.* Once we present a name column the user would expect to be able to perform operations on it, such as sort and filter and have the "logical" result of that sort or filter. Thus, a desirable trait for this friendly presentation is that it's also a valid first class "column". The challenge with this is that some foreign keys are composed of more than one column (compound keys,) and some columns are part of more than one foreign key, and thus could be presented as more than one kind of link. Additionally, the client doesn't know the possible foreign keys until it sees the query result, so it can't easily formulate a proper join ahead of time. Meanwhile, the server already knows the shape of the data, and can apply appropriate data shaping to present the data in a form conducive to single-query presentation, thus reducing visible latency for the user. After discussing many possible designs, the current preferred choice is a presentation option called *linkify.* Instead of trying to squeeze link annotations into the foreign key columns themselves, *linkify* is an option that creates new columns, one column per foreign key in the resource instance. The data type of this column will be the special data type *link.* A *link* syntactically looks like an *object* but has a well-known field *_c_label* that contains the user-readable label of the linked-to resource instance. Additionally, it repeats the key values of the foreign keys that identify the link target, named by the target table column names as field names. Finally, a *link* is a parametric datatype (just like *array-of-X* or *object-with-schema-Y)* where the parameter is the target dataset id. As an example, given the following three datasets (let's ignore time for now, and ignore the halting modeling of squishing disk and network into one row):

Example Disk/Network Transfer dsid 1515

| Hostid | Interface | Disk | Column 1 |
|---|---|---|---|
| Host 1 | eth0 | /dev/sdb2 | |
| Host 2 | eth0 | /dev/sda1 | |
| Host 3 | eth1 | /dev/sda1 | |
| Untitled | | | |

The schema for the example disk/network transfer follows:

```
... {
foreignKeys: [
{ targetDataset: "5330", srcFields: ["Hostid", "Disk"], dstFields: ["Disk Host", "Disk Name"] },
{ targetDataset: "18227", srcFields: ["Hostid", "Interface"], dstFields: ["Interface Host", "Interface Name"] }
]
'''
}
```

Example Disk Resource dsid 5330

| Disk Host | Disk Name | Free Space | Label |
|---|---|---|---|
| Host 1 | /dev/sda1 | 3.2G | Host 1 System Disk |
| Host 1 | /dev/sdb2 | 3844G | Host 1 Data Disk |
| Host 2 | /dev/sda1 | 0.1G | Host 2 System Disk |
| Untitled | | | |

The schema for the example disk resource follows:

```
...{
labelColumnName: "Label",
...
}
```

Example Interface Resource dsid 18227

| Interface Host | Interface Name | Label |
|---|---|---|
| Host 1 | eth0 | Main Interface |
| Host 2 | eth0 | Main Interface |
| Host 2 | eth1 | Management Interface |
| Untitled | | |

The schema for the example interface resource follows:

```
...{
labelColumnName: "Label",
...
}
```

If a query sources the Example DiskNetwork Transfer dataset, and runs it through the linkify option, the returned dataset follows:

| Hostid | Interface | Disk | Example Disk Resource | Example Interface Resource |
|---|---|---|---|---|
| Host 1 | eth0 | /dev/sdb2 | { "_c_label":"Host 1 Data Disk", "Disk Host":"Host 1", "Disk Name":"/dev/sdb2" } | {"_c_label":"Main Interface", "Interface Host":"Host 1", "Interface Name":"eth0" } |
| Host 1 | eth0 | /dev/sda1 | { "_c_label":"Host 1 System Disk", "Disk Host":"Host 1", "Disk Name":"/dev/sda1" } | {"_c_label":"Main Interface", "Interface Host":"Host 1", "Interface Name":"eth0" } |
| Host 2 | eth1 | /dev/sda1 | {"_c_label":"Host 2 System Disk", "Disk Host":"Host 2", "Disk Name":"/dev/sda1" } | { "_c_label":"Management Interface", "Interface Host":"Host 2", "Interface Name":"eth1" } |
| Untitled | | | | |

The schema for the returned query result follows:

```
...{
resultSchema: {
typedefDefinition: {
fields: [
{
name: "link_5330",
type: {
rep: "link",
def: {targetDataset: "5330", fields: ... }
},
label: "Example Disk Resource"
},
{
name: "link_18227",
type: {
rep: "link",
def: {targetDataset: "18227", fields: ... }
},
label: "Example Interface Resource"
},
]
}
...
}
}
```

Some important call-outs:

- The 'name' of the link fields is constructed of the target dataset, but if two different foreign keys link to the same dataset ID, one of them will get a _2 tacked on to the name. The actual label of the dataset is provided in the label of the column. (The labels may be non-unique)
- The primary key columns are still present in the output
- The names of the fields in the link are the same as the fields in the target resource (not the source resource.)

Automatic metadata inference

The low-level type schema of a dataset looks a lot like a traditional relational database table schema: There are attributes (columns,) they have names, and they have datatypes. Additional mechanisms known from relational algebra and temporal algebra include storing point time datum or interval time datum for the temporal relevance of the tuple (row,) declaring primary and candidate keys as a union of field values to uniquely identify resource instances (although in the database, there will be many rows for a particular resource instance, to cover the resource state over time,) and declaring foreign keys to functionally link datasets to other datasets. Metadata about a dataset is the information that allows us to build the object model of an example embodiment to put the relationships between objects, and the events occurring related to objects, over time, in an understandable presentation. The OPAL implementation contains mechanisms to explicitly specify the metadata for output datasets. This is useful for users who know exactly what they're after.

Examples of these metadata mechanisms include:

- *setvf* specifies which field is "valid from timestamp" - a dataset that is resource or event must have a valid-from field.
- *setvt* specifies which field is "valid to timestamp" - a dataset that is resource must have a valid-to field.
- *addfk* adds a foreign key relationship between the current dataset and some other dataset
- *setpk* specifies which particular fields together make up the primary key of a dataset. A resource dataset must have a primary key. Note that we use "primary key" differently than traditionally used in relational algebra.
- *addkey* declares a candidate key for the dataset - a candidate key is a combination of fields (one or more) whose values together make up a unique identifier for the entity in question. Any candidate key could potentially be a primary key, and any foreign key could point to any candidate key, but one candidate key is "elevated" to the role of "primary key" because we need some default for presentation purposes.

Additionally, we have the concept of "related keys." "Related keys" are non-unique links between datasets. For example, a dataset representing "datacenter" may have a "related key" to a dataset representing "hosts," for all the hosts in that datacenter. Or, a dataset representing "containers" may have a related key to a dataset representing "log events" for that particular container.

The case for smarts

When a user starts with some dataset, and refines it through a worksheet of stages of pipelines into a new shape, we can often do a good job of preserving whatever knowledge exists in the system into the metadata. For example, if the input dataset has a timestamp column marked as "valid from," then any minor operation on this column (rename, or inclusion in some key relationship) would not invalidate that metadata, and the metadata is carried through the worksheet to apply to the output dataset. Similarly, as long as columns making up key relationships are not removed or mutated in incompatible ways, those key relationships can be preserved. The way this is implemented in the OPAL compiler, is that each verb has knowledge about how it may mutate metadata, and as part of compilation, the verb implementation is responsible for preserving and carrying forward as much metadata as is algebraically possible, given the constraints of the implementation. Frequently, this saves the user from having to redundantly declare metadata relationships that are already known to the system.

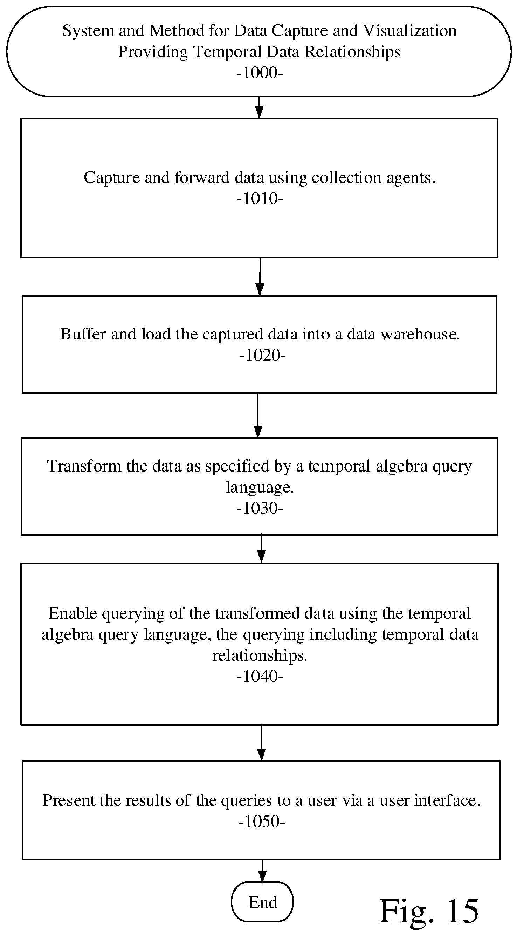

Referring now to Fig. 15, a processing flow diagram illustrates an example embodiment of a method implemented by the system as described herein. The method 1000 of an example embodiment includes: capturing and forwarding data using collection agents (processing block 1010); buffering and loading the captured data into a data warehouse (processing block 1020); transforming the data as specified by a temporal algebra query language (processing block 1030); enabling querying of the transformed data using the temporal algebra query language, the querying including temporal data relationships (processing block 1040); and presenting the results of the queries to a user via a user interface (processing block 1050).

Embodiments provide a data capture and visualization system providing temporal data relationships. Example embodiments are configured to: capture and forward data using collection agents; buffer and load the captured data into a data warehouse; transform the data as specified by a temporal algebra query language; enable querying of the transformed data using the temporal algebra query language, the querying including temporal data relationships; and present the results of the queries to a user via a user interface.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

**Claims**

**1.** A data capture and visualization system providing temporal data relationships, the system comprising:

a data processor; and
a data capture and visualization system, executable by the data processor, being configured to:

capture and forward data using collection agents;
buffer and load the captured data into a data warehouse;
transform the data as specified by a temporal algebra query language;
enable querying of the transformed data using the temporal algebra query language, the querying including temporal data relationships; and
present the results of the queries to a user via a user interface.

2. The system of claim 1, wherein the temporal algebra query language includes inputs, verbs, functions, and outputs.

3. The system of claim 1 or 2, wherein the data capture and visualization system being further configured to collect data into observations, which are transformed into datasets, optionally wherein the datasets are table datasets, event datasets, or resource datasets, further optionally wherein the data capture and visualization system being further configured to perform temporal splicing of resource datasets.

4. The system of any preceding claim wherein the data capture and visualization system being further configured to perform aggregation over time or identity.

5. The system of any preceding claim wherein the data capture and visualization system being further configured to perform selecting or filtering using a temporal algebra, optionally wherein the temporal algebra includes verbs for time windows or time intervals.

6. The system of any preceding claim wherein the data capture and visualization system being further configured to perform temporal projection.

7. The system of any preceding claim wherein the data capture and visualization system being further configured to perform temporal joins.

8. The system of any preceding claim wherein the data capture and visualization system being further configured to perform temporal deduplication.

9. The system of any preceding claim 1 wherein the data capture and visualization system being further configured to perform temporal group by.

10. The system of any preceding claim wherein the data capture and visualization system being further configured to perform stream processing for temporal datasets.

11. The system of any preceding claim wherein the data capture and visualization system being further configured to perform backfilling and asynchronous processing for temporal datasets.

12. A method for data capture and visualization providing temporal data relationships, the method comprising:

capturing and forwarding data using collection agents;
buffering and loading the captured data into a data warehouse;
transforming the data as specified by a temporal algebra query language;
enabling querying of the transformed data using the temporal algebra query language, the querying including temporal data relationships; and
presenting the results of the queries to a user via a user interface.

13. The method of claim 12 wherein the temporal algebra query language includes inputs, verbs, functions, and outputs.

14. The method of claim 12 or 13 including collecting data into observations, which are transformed into datasets.

15. The method of claim 12, 13 or 14, including:

performing aggregation over time or identity; and/or

performing selecting or filtering using a temporal algebra; and/or
performing temporal group by.

T1

6

ELB
k8s ingress

5

3

Observe
Agent

2

4

1

Customer
System

Fig. 1A

Fig. 1B

Fig. 2

Fig. 3

**Result** [8]                                    0%

NULLIF(MIN(IFNULL(R.VALID_FROM, -9223...

4

**Aggregate** [6]                                 0%

MIN(IFNULL(R.VALID_FROM, -92233720368...

5

**WindowFunction** [5]                            0%

SUM(IFF(R_PREWINDOWED.WINDOW_ST...

5

**WindowFunction** [4]                            0%

LAG(IFNULL(R.VALID_TO, 9223372036854 7...

5

**TableScan** [7]                                 0%

PTU.PACK.R

Fig. 4A

**Result** [28]                                          0%

NULLIF(MIN(UNION_ALL(R_BOUNDED.VAL...

⬓ 5

**Aggregate** [24]                                       0%

MIN(UNION_ALL(R_BOUNDED.VALID_FRO...

⬓ 12

**WindowFunction** [23]                                  0%

SUM(IFF(R_PREWINDOWED.WINDOW_ST...

⬓ 12

**WindowFunction** [22]                                  0%

LAG(R_COUNTS.NEXT_TS) OVER (PARTIT...

⬓ 12

**Filter** [27]                                          0%

WIN_SUM(SUM(R_EVENTS.INC), PSEUDO...

⬓ 18

( T4 )

Fig. 4B

Fig. 4C

Fig. 5A

Fig. 5B

EP 3 944 092 A1

Fig. 5C

Fig. 5D

Result [5]                                    0%
(EXTRACT(epoch_nanosecond from 2019-0...

21

Aggregate [3]                                 0%
ANY_VALUE(NTH_VALUE_INTERNAL(UNIF...

100

WindowFunction [2]                            0%
FIRST_VALUE(EVENT.C) OVER (PARTITIO...

100

Generator [4]                                 0%
100

Fig. 6

Fig. 7

**Result [10]**      0%
W1.VALID_FROM,W1.VALID_TO,W1.K,ANY...

( 21 )

**Aggregate [5]**      0%
ANY_VALUE(W1.C)

( 29 )

**Join [9]**      0%
(MIN(W2.D) = W1.D) AND (W2.K = W1.K) A...

( 21 )      ( 29 )

**Filter [7]**      0%
MIN(W2.D) IS NOT NULL

**JoinFilter [8]**      0%
Original join id:9

( 21 )      ( 100 )

**Aggregate [4]**      0%
MIN(W2.D)

**WithReference [3]**      0%
W1

( 100 )

**WithReference [2]**      0%
W2

( 100 )      ( 100 )

**WithClause [1]**      0%
EVENT

( 100 )

**Generator [6]**      0%
100

Fig. 8

Fig. 9A

Fig. 9B

Fig. 9C

Transform
range (v=2)

Fig. 9D

Fig. 9E

Fig. 10

Fig. 11

Fig. 12

EP 3 944 092 A1

Fig. 13

Fig. 14

System and Method for Data Capture and Visualization
Providing Temporal Data Relationships
-1000-

Capture and forward data using collection agents.
-1010-

Buffer and load the captured data into a data warehouse.
-1020-

Transform the data as specified by a temporal algebra query language.
-1030-

Enable querying of the transformed data using the temporal algebra query language, the querying including temporal data relationships.
-1040-

Present the results of the queries to a user via a user interface.
-1050-

End

Fig. 15

Europäisches
Patentamt

European
Patent Office

Office européen
des brevets

# EUROPEAN SEARCH REPORT

Application Number

EP 21 18 4533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENIS KLIMOV ET AL: "Intelligent selection and retrieval of multiple time-oriented records", JOURNAL OF INTELLIGENT INFORMATION SYSTEMS, KLUWER ACADEMIC PUBLISHERS, BO, vol. 35, no. 2, 3 September 2009 (2009-09-03), pages 261-300, XP019821293, ISSN: 1573-7675 * abstract * * Section "1 Introduction: knowledge-based exploration of multiple time-oriented records" * * section "2. Related works" * * section "2.2 Knowledge-based querying of subject data" * * section "4.2 Expressions referring to statistical aggregations of the time-oriented data" * * section "7. Discussion" * * figures 2, 9-11 * | 1-15 | INV. G06F16/21 G06F16/2458 |
| A | CARLO COMBI ET AL: "The t4sql temporal query language", PROCEEDINGS OF THE ACM SIXTEENTH CONFERENCE ON INFORMATION AND KNOWLEDGE MANAGEMENT (CIKM 2007), 6-9 NOVEMBER 2007, LISBOA, PORTUGAL, ACM, 2 PENN PLAZA, SUITE 701 NEW YORK NY 10121-0701 USA, 6 November 2007 (2007-11-06), pages 193-202, XP058192921, DOI: 10.1145/1321440.1321470 ISBN: 978-1-59593-803-9 * the whole document * | 1-15 | TECHNICAL FIELDS SEARCHED (IPC) G06F |

The present search report has been drawn up for all claims

| Place of search | Date of completion of the search | Examiner |
|---|---|---|
| Berlin | 10 December 2021 | Schmidt, Axel |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63054679